# EUROPÄISCHE PATENTSCHRIFT

(11) **EP 0 507 385 B1**
(45) Veröffentlichungstag und Bekanntmachung des Hinweises auf die Patenterteilung: **03.06.1998**
(21) Anmeldenummer: 92200861.0
(22) Anmeldetag: 26.03.1992
(51) Int. Cl.: H04J 3/07

(54) **Übertragungssystem für die synchrone digitale Hierarchie**
Transmission system for synchronous digital hierarchy
Système de transmission pour la hiérarchie numérique synchrone

(30) Priorität: 04.04.1991 DE 4110933
(43) Veröffentlichungstag der Anmeldung: 07.10.1992
(73) Patentinhaber: LUCENT TECHNOLOGIES INC., Murray Hill, New Jersey 07974-0636 (US)
(72) Erfinder: Urbansky, Ralph, Dr.-Ing., W-8501 Schweig 2 (DE)
(74) Vertreter: Watts, Christopher Malcolm Kelway, Dr.

(56) Entgegenhaltungen:
- EP-A- 0 412 575
- DE-A- 3 315 372
- DE-A- 4 018 687
- GB-A- 1 195 899
- US-A- 4 996 698
- DATABASE WPI Week 7520, Derwent Publications Ltd., London, GB; AN 75-F2727W & NL-A-7 414 194

## Beschreibung

Die Erfindung bezieht sich auf ein Übertragungssystem für die synchrone digitale Hierachie mit wenigstens einer Anpassungsschaltung zum Ausgleich von Phasenschwankungen eines STM-N-Signales gemäß dem Oberbegriff des Anspruchs 1. Ein derartiges Übertragungssystem ist aus der DE 40 18 687 Al bekannt.

Bei einem solchen Übertragungssystem für die digitale synchrone Hierachie werden plesiochrone Signale durch eine Multiplexbildung zusammengefaßt und über eine optische Übertragungsstrecke übertragen. Zwei digitale Signale heißen plesiochron, wenn ihre Bitraten innerhalb einer gegebenen Toleranz vom Nennwert abweichen. Die Signale werden dabei nach einem bestimmten Muster zusammengefaßt und nach Rahmen strukturiert. Ein solcher Rahmen wird bei der digitalen synchronen Hierachie als synchroner Transportmodul STM-N bezeichnet und ist insbesondere in den CCITT-Empfehlungen "Recommendation G 707, G 708 und G 709" beschrieben.

Die Struktur eines STM-1-Rahmens ist in Fig. la schematisch dargestellt. Der Rahmen besteht aus 270 Spalten und 9 Zeilen. In jeder Spalte einer Zeile ist jeweils 1 Byte enthalten. In den Zeilen 1 bis 3 und 5 bis 9, jeweils in den Spalten 1 bis 9 ist der sogenannte "Section Overhead" (SOH) für Steuerungs- und Fehlererkennungsinformationen, in der vierten Zeile von Spalte 1 bis 9 ist eine Verwaltungseinheit, die als "AU-Pointer" (AU-P) bezeichnet ist, und in den restlichen Spalten und Zeilen die eigentliche Nutzinformation, die "STM-1-Payload" (P) untergebracht. Wie Fig. lb zeigt, ist in der STM-1-Payload beispielsweise ein virtueller Container VC-4 unterge bracht, der aus einem Nutzinformationsbereich und einem Steuerungsbereich POH (Path Overhead) besteht. Unter einem Container wird hierbei die Grundverpackungseinheit für Nutzsignale verstanden. In einem solchen Container können noch weitere Container untergebracht werden.

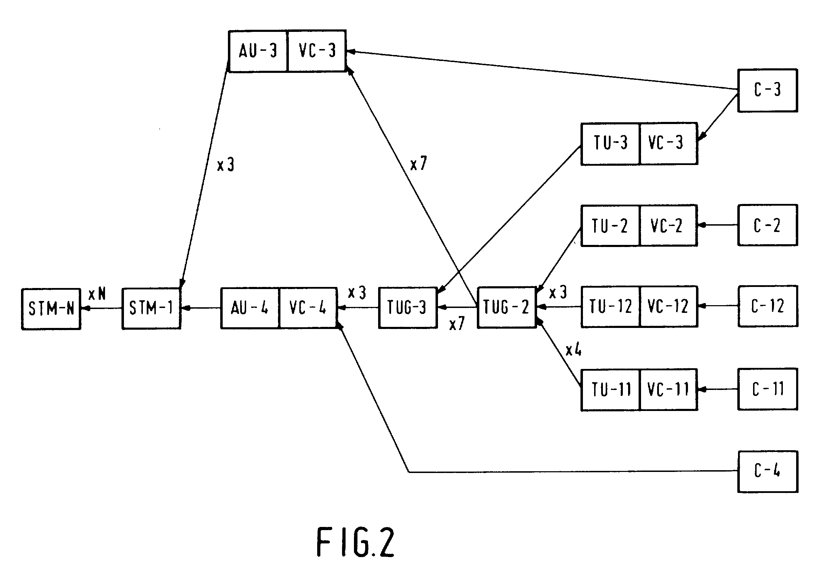

Eine Multiplexbildung nach dem gegenwärtigen Diskussionsstand für den STM-N-Rahmen ist in Fig. 2 gezeigt. Beispielsweise werden in einem Container C-4 Daten eines Nutzsignals mit einer Bitrate von 140 MBit/s hineingebracht. Durch Hinzufügung des POH wird aus dem Container C-4 ein virtueller Container VC-4. Durch Hinzufügung von Stopfbytes und weiteren Bytes wird aus dem virtuellen Container VC-4 eine "Administrative Unit" AU-4. Der Container VC-4 kann auch durch Zusammenfügung von mehreren Containern C-12 gebildet werden. In einem solchen Container C-12 werden Daten eines Nutzsignals mit einer Bitrate von 2 MBit/s hineingelegt. Daraus wird durch Hinzufügung eines POH ein virtueller Container VC-12. Aus dem virtuellen Container VC-12 wird durch eine Hinzufügung von Stopfbytes und weiteren Bytes eine "Tributary Unit" TU-12. Diese TU's werden zu Gruppen TUG-2 bzw. TUG-3 zusammengefaßt.

STM-N-Signale werden über eine Übertragungsstrecke gesendet, die in bestimmten Abständen Schaltungen aufweist, in denen u.a. eine Taktanpassung des aus dem STM-N-Signals gewonnenen Taktes mit einem lokalen standardisierten Takt vorgenommen wird. Auch bei der Zusammenfassung der verschiedenen zu sendenden Signale zu einem STM-N-Signal (beispielsweise werden vier STM-1-Signale zu einem STM-4-Signal zusammengefaßt) wird eine Taktanpassung vorgenommen. Auf der Empfangsseite des Übertragungssystems, am Ende der optischen Übertragungsstrecke, wird das STM-N-Signal wieder in einzelne Signale mit einer niedrigeren Bitrate aufgelöst.

Bei der Zusammenfassung mehrerer STM-1-Signale zu einem STM-4-Signal und bei der Taktanpassung in einer Regeneratorschaltung können Taktanpassungsprobleme auftreten, wie z.B. in dem Aufsatz "Jitter bei der Übertragung plesiochroner Signale in der SDH" von M. Robledo und R. Urbansky, PKI Technische Mitteilungen 3/1989, Seiten 31 bis 38, beschrieben ist. Aufgrund von Phasenschwankungen (Wander) oder kleinen Frequenzabweichungen sind die unterschiedlichen Takte der verschiedenen STM-1-Signale nicht mehr zueinander angepaßt. Eine Taktanpassung wird durch ein Bytestopfverfahren durchgeführt. Hierbei werden an fest vorgegebenen Stellen entweder positive oder negative Stopfstellen durch Stopfbytes besetzt. Bei einem positiven Stopfvorgang wird an der Stopfstelle die Nutzinformation ausgelassen. Diese Stopfstelle enthält nämlich sonst eine Nutzinformation. Bei einem negativen Stopfvorgang wird in der Stopfstelle Nutzinformation übertragen. Sonst trägt diese Stopfstelle keine Nutzinformation. Ein Stopfvorgang wird auch als Pointer-Aktion bezeichnet.

Nach Durchlaufen mehrerer Anpassungsschaltungen, in denen Taktanpassungen durchgeführt werden, kann eine Häufung von Pointer-Aktionen auftreten. Hierdurch kann ein Überlaufen des Pufferspeichers auf der Empfangsseite des Übertragungssystems vorkommen, wenn dieser nicht genügend groß gewählt ist. Hierbei tritt dann ein Datenverlust auf. Der Pufferspeicher in einer Schaltung auf der Empfangsseite des Übertragungssystems dient zur Anpassung der Daten an den lokalen Takt. Beispielsweise könnten mehrere negative Stopfstellen hintereinander vorkommen, wodurch der Überlauf der Pufferspeichers bewirkt wird. Um ein solches Überlaufen zu vermeiden, könnte der Pufferspeicher groß genug gewählt werden. Dies ist jedoch unerwünscht, da dadurch der Schaltungsaufwand des gesamten Übertragungssystems erweitert und die Durchlaufzeit der Daten erhöht wird.

Der Erfindung liegt die Aufgabe zugrunde, ein Übertragungssystem für die digitale synchronie Hierachie der eingangs genannten Art zu schaffen, bei dem auch bei Häufungen von Pointer-Aktionen ein Pufferüberlauf verhindert wird.

Diese Aufgabe wird ausgehend von einem Übertragungssystem der eingangs genannten Art erfindungsgemäß gelöst durch die kennzeichnenden Merkmale des Anspruchs 1.

Das Übertragungssystem enthält eine Anpassungsschaltung, mit der Stopfvorgänge gesteuert werden. Dabei weist die Anpassungsschaltung wenigstens einen Pufferspeicher auf, in den Daten eines Containers eingeschrieben und aus dem Daten ausgelesen werden. Bei der Einschreibung der Daten werden unter Schreibadressen, die von einem Schreibadressengenerator geliefert werden, Daten in den Pufferspeicher eingeschrieben. Ein Leseadressengenerator liefert dem Pufferspeicher noch Leseadressen. Die Daten, welche unter der Leseadresse abgelegt sind, werden dann aus dem Pufferspeicher ausgelesen.

Dabei wird aus den einzuschreibenden Daten die Information gewonnen, ob eine positive, negative oder keine Stopfstelle für einen Container vorliegt. Diese Stopfinformation wird tiefpaßgefiltert, so daß sich bei hochfrequenten Pointer-Aktionen, d.h. häufige Pointer-Aktionen, die Wirkung ergibt, daß diese zeitlich gleichmäßig verteilt werden. Die Zeitkonstante der Tiefpaßfilterung sollte groß gewählt sein. Aus der NL-A-74 14 194 ist es bekannt, tiefpaßgefilterte Schreib- und Leseadressen als Grundlage für eine Stopfentscheidung heranzuziehen.

Bei der erfindungsgemäßen Art der Tiefpaßfilterung werden nur die Pointer-Aktionen berücksichtigt, die von der vorhergehenden Anpassungsschaltung im Übertragungssystem herrühren. Nach der Tiefpaßfilterung werden die tiefpaßgefilterten Werte mit Differenzwerten addiert. Die Differenzwerte werden durch eine Subtraktion zwischen den Lese- und Schreibadressen gebildet. Die sich nach der Addition ergebenden Werte dienen zur Entscheidung, ob ein Stopfsignal erzeugt wird.

Das Stopfsignal dient zur Angabe einer negativen oder positiven Stopfstelle. Es wird gebildet, wenn bestimmte Werte unterschritten oder überschritten sind. In einer Ausgangsschaltung wird aus den im Pufferspeicher gespeicherten Daten ein Ausgangssignal gebildet, welches negative oder positive Stopfstellen enthalten kann. Soll positiv gestopft werden, so werden Daten für einen Takt nicht ausgelesen, und soll negativ gestopft werden, so werden Daten an eine sonst nicht mit Nutzinformation besetzte Stopfstelle hineingegeben.

Auch kann die Differenzbildung zwischen der Lese- und Schreibadresse vorgenommen werden. Die sich daraus ergebenden Differenzwerte werden tiefpaßgefiltert. In den Differenzwerten ist die Information enthalten, ob für einen Container eine positive, negative oder keine Stopfstelle vorliegt. Einerseits ist also die Information enthalten, ob eine Pointer-Aktion in der vorhergehenden Anpassungsschaltung vorgenommen wurde. Andererseits ist noch in den Differenzwerten die Information über den Phasenunterschied zwischen den Taktsignalen auf der Lese- und Schreibseite der Anpassungsschaltung enthalten. Durch die Tiefpaßfilterung der Differenzwerte ergibt sich für hochfrequente Pointer-Aktionen, daß deren Wirkung zeitlich gleichmäßig verteilt wird. Die Zeitkonstante dieser Tiefpaßfilterung sollte ebenfalls groß gewählt sein. Die Zeitkonstante der Tiefpaßfilterung muß mehrere Rahmen umfassen. Bei der Tiefpaßfilterung haben später zugeführte Differenzwerte einen größeren Einfluß auf die sich nach der Tiefpaßfilterung ergebenden Werte als zeitlich früher zugeführte Differenzwerte. Unter der Tiefpaßfilterung ist keine arithmetische Mittelwertbildung zu verstehen, bei der die Differenzwerte über eine bestimmte Dauer gleich bewertet addiert werden, sondern eine beispielsweise exponentielle Mittelwertbildung, bei der zeitlich später zugeführte Differenzwerte - wie oben erwähnt - einen größeren Einfluß auf die Mittelwertbildung haben. Bei der Tiefpaßfilterung ergibt sich ein im wesentlicher konstanter Verlauf im Durchlaßbereich und dann ein Abfall um mindestens 20dB/Dekade.

Aufgrund der Tiefpaßfilterung wird bewirkt, daß die Pointer-Aktionen gleichmäßiger im Datenstrom verteilt sind und dadurch der Pufferspeicher in der Schaltung auf der Empfangsseite der optischen Übertragungsstrecke eine bestimmte Größe nicht überschreiten muß.

Eine Ausführungsform zur Tiefpaßfilterung ist dadurch realisiert, daß zur Tiefpaßfilterung in der Stopfentscheidungsschaltung eine Addition der eintreffenden Werte und von rückgekoppelten Werten, eine Zwischenspeicherung der addierten Werte mindestens einmal über den Zeitraum von vier Rahmen, eine Multiplikation der zwischengespeicherten Werte mit einem ersten Faktor zur Bildung der rückgekoppelten Werte und eine Multiplikation mit einem zweiten Faktor zur Bildung der tiefpaßgefilterten Werte vorgesehen ist. Werden für die Ausführungsform diskrete Bauelemente verwendet, so wird die Addition in einem Addierer, die Zwischenspeicherung in einem Register und die jeweilige Multiplikation in einem Multiplizierer vorgenommen. Der erste Faktor kann den Wert 15/16 und der zweite Faktor den Wert 1/16 aufweisen.

Eine weitere Ausführungsform zur Tiefpaßfilterung ist dadurch realisiert, daß zur Tiefpaßfilterung in der Stopfentscheidungsschaltung ein Zählvorgang vorgesehen ist, bei dem eine Zählerveränderung mindestens einmal über den Zeitraum von zwei Rahmen vorgesehen ist, bei dem die Zählrichtung während eines Zeitraumes von der Stopfinformation und während eines weiteren Zeitraumes vom Vorzeichen des Zählerstandes abhängt und bei dem der Zählerstand einen tiefpaßgefilterten Wert darstellt. Wird eine solche Tiefpaßfilterung mit diskreten Bauelementen bewerkstelligt, so enthält ein Tiefpaßfilter einen Zähler, an dessen Takteingang ein Takt anliegt, dessen Dauer einen halben Rahmen beträgt, und an dessen Zählrichtungseingang beispielsweise über eine Umschalteinrichtung entweder die Stopfinformation oder das Vorzeichen des Zählerstandes anliegt.

Ferner ist eine Ausführungsform zur Tiefpaßfilterung dadurch realisiert, daß zur Tiefpaßfilterung in der Stopfentscheidungsschaltung eine Addition der mit einem dritten Faktor multiplizierten Differenzwerte und eines rückgekoppelten Wertes mindestens einmal während des Zeitraumes von vier Rahmen, während der Bildung eine Leseadresse eine Akkumulation der addierten Werte zur Bildung von tiefpaßgefilterten Werten und eine Multiplikation mit dem negativen dritten Faktor zur Bildung des rückgekoppelten Wertes vorgesehen ist. Wird die Tiefpaßfilterung mit diskreten Bauelementen realisiert, so werden die Differenzwerte mit einem dritten Faktor multipliziert, der den Wert 1/16 aufweist, die Addition mit einem Addierer und die Akkumulation in einem Akkumulator durchgeführt. Die Multiplikation im Rückkopplungsweg, wird mittels eines Multiplizierers durchgeführt, der den Ausgangswert des Akkumulators mit dem Faktor -1/16 multipliziert. Der rückgekoppelte Wert wird dem Addierer mindestens einmal während des Zeitraumes von vier Rahmen zugeführt.

In einer Anpassungsschaltung wird eine Taktanpassung zwischen dem aus den eintreffenden Daten (STM-N-Signal) gewonnenen Takt und dem lokalen Takt vorgenommen. Bei einer Taktschwankung werden Pointer-Aktionen hervorgerufen. Nachdem die STM-N-Signale die Übertragungsstrecke durchlaufen haben, müssen die Stopfbytes auf der Empfangsseite des Übertragungssystems wieder entfernt werden. Anschließend müssen die Nutzbytes gleichmäßig verteilt werden, damit der Phasenverlauf des den Nutzbytes zugeordneten Taktsignals die Jitteranforderungen nach CCITT erfüllen kann. Mit Jitter wird die Abweichung der Taktflanken von ihrer Sollage bezeichnet. Bei einer gleichmäßigen Verteilung der Daten wird die Hilfe eines Pufferspeichers und einer Phasenregelschleife auf der Empfangsseite des Übertragungssystems beansprucht. Hierbei lassen sich insbesondere hochfrequente Spektralanteile im Jitter durch die Tiefpaßeigenschaft der Phasenregelschleife reduzieren. Wird die Stopfentscheidung nach der Subtraktion und Tiefpaßfilterung nur mittels einer Komparatorentscheidung, ob positiv, negativ oder überhaupt nicht gestopft wird, durchgeführt, können niederfrequente Spektralanteile im Jitter auftreten, die sich nicht mit einfachen Mitteln auf der Empfangsseite reduzieren lassen. Daher ist vorgesehen, daß die Stopfentscheidungsschaltung zur Bildung des Mittelwerts der sich aus der Tiefpaßfilterung und Differenzbildung ergebenden Werte über eine bestimmte Dauer und zur Bildung eines vom Mittelwert abhängigen Stopfsignals dient. Über eine bestimmte Dauer wird der Mittelwert über die sich nach der Tiefpaßfilterung und Differenzbildung ergebenden Werte gebildet. Der sich daraus ergebende Mittelwert dient zur Entscheidung, ob negativ, positiv oder überhaupt nicht gestopft wird. Die Mittelwertbildung kann beispielsweise eine Zeile- oder Rahmendauer oder ein Vielfaches davon betragen.

In einer Weiterbildung der Erfindung ist vorgesehen, daß in der Stopfentscheidungsschaltung nach der Tiefpaßfilterung und Differenzbildung über eine bestimmte Dauer zur Mittelwertbildung eine Akkumulation der sich aus der Tiefpaßfilterung und Differenzbildung ergebenden Werte und anschließend ein Vergleich des Mittelwertes mit zwei vorgegebenen Extremwerten vorgesehen ist und daß die Stopfentscheidungsschaltung zur Erzeugung eines negativen Stopfsignals zur Bildung einer negativen Stopfstelle, wenn der Mittelwert kleiner als der niedrige Extremwert ist, und zur Erzeugung eines positiven Stopfsignals vorgesehen ist, wenn der Mittelwert größer als der hohe Extremwert ist. Werden diskrete Bauelemente zur Realisierung dieser Weiterbildung verwendet, so wird die Akkumulation der Differenzwerte in einem Akkumulator und der Vergleich des Mittelwertes mit zwei vorgegebenen Extremwerten in einem Komparator vorgenommen. Die beiden Extremwerte sind so gewählt, daß eine Taktanpassung mit den zur Verfügung stehenden Stopfstellen ausreichend möglich ist. Eine weitere Verringerung der niederfrequenten Spektralanteile des Jitters wird dadurch erreicht, indem in der Stopfentscheidungsschaltung zusammen mit der Akkumulation der sich aus der Tiefpaßfilterung und Differenzbildung ergebenden Werte eine Akkumulation von Werten einer periodischen Zahlenfolge oder einer Zufallsfolge vorgesehen ist. Die periodische Zahlenfolge oder eine Zufallsfolge kann mit Hilfe eines Zählers und gegebenenfalls mit einem Dekoder realisiert werden. Durch diese zusätzliche Akkumulation von Werten einer periodischen Zahlenfolge oder einer Zufallsfolge werden häufiger Stopfvorgänge vorgenommen, die die Wirkung haben, daß die niederfrequenten Spektralanteile des Jitters weiter verringert werden.

Eine gegenüber der vorherigen Ausführungsform weitere Verringerung des niederfrequenten Jitters wird erreicht, wenn die Stopfentscheidungsschaltung zur Bildung eines Differenzwertes von Null bei halbem Füllstand des zugeordneten Pufferspeichers, zur Multiplikation der negativen und positiven Stopfsignale mit einem vierten Faktor und zur Akkumulation wenigstens eines mit einem vierten Faktor multiplizierten Wertes mit einem sich aus der Tiefpaßfilterung und Differenzbildung ergebenden Wertes vorgesehen ist. Hierbei wird die Anzahl der Stopfvorgänge nochmals erhöht. Die Multiplikation der negativen und positiven Stopfsignale mit einem vierten Faktor kann bei einer Realisierung mit diskreten Bauelementen in einem Multiplizierer vorgenommen werden. Der vierte Faktor kann beispielsweise einen Wert von ungefähr 2 aufweisen.

Die Mittelwertbildung kann schon bei der Filterung verwendet werden, so daß eine anschließende Akkumulation wegfallen kann. Dabei sollte der Akkumulator durch ein Register ersetzt werden.

Die Tiefpaßfilterung wirkt über die Schreib- und Leseadressengeneratoren auf die Stopfentscheidung ein, welche die Taktanpassung in der Anpassungsschaltung betrifft. Um diese Einwirkung zu vermindern, ist in der Stopfentscheidungsschaltung eine Addition der mit einem fünften Faktor multiplizierten negativen oder positiven Stopfsignale zusammen mit den mit einem dritten Faktor multiplizierten Differenzwerte und der rückgekoppelten Werte vorgesehen.

Die bisher geschilderten Ausführungsformen der Stopfentscheidungsschaltung können auch mittels eines Prozessorbausteines realisiert werden.

Für den Stopfvorgang eines VC-4-Containers wird jeweils nur ein Pufferspeicher, ein Schreib- und Leseadressengenerator und eine Stopfentscheidungsschaltung benötigt. Sollen beispielsweise mit VC-12-Containern Stopfvorgänge durchgeführt werden, so enthält die Anpassungsschaltung 63 Pufferspeicher, 63 Schreib- und Leseadressengeneratoren und 63 Stopfentscheidungsschaltungen. Wenn in einem VC-4-Container nur VC-12-Container enthalten sind, beträgt deren Anzahl 63. Die Anzahl der Pufferspeicher, die Anzahl der Schreib- und Leseadressengeneratoren und die Anzahl der Stopfentscheidungsschaltungen hängt also von der Anzahl der zur Einfügung von Stopfstellen vorgesehenen Container ab. Bei Stopfvorgängen mit VC-12-Containern ist zu beachten, daß zwei aufeinanderfolgende Stopfvorgänge nach den CCITT-Empfehlungen mindestens einen Abstand von 16 STM-1-Rahmen aufweisen müssen.

Schreibadressen für den Pufferspeicher dürfen nur erzeugt werden, wenn eine Nutzinformation an einem einen Container zugeordneten Pufferspeicher anliegt. Hierzu ist eine Eingangsschaltung bestimmt, die zur Erzeugung eines Schreibtaktsignals aus einem aus dem STM-N-Signal gewonnenen Eingangstaktsignal für wenigstens einen aus einem Schreibzähler bestehenden Schreibadressengenerator und zur Bildung von Schreibtaktimpulsen nur bei anliegenden Daten des dem Schreibadressengenerators zugeordneten Containers vorgesehen ist. Werden nur Stopfvorgänge für einen VC-4-Container durchgeführt, so ist die Erzeugung eines Schreibtaktsignals für einen Schreibzähler erforderlich. Werden jedoch Stopfvorgänge für VC-12-Container durchgeführt, so ist es erforderlich, daß 63 Schreibtaktsignale für 63 Schreibzähler gebildet werden.

Leseadressen für den Pufferspeicher werden ebenfalls nur erzeugt, wenn eine Nutzinformation aus einem einen Container zugeordneten Pufferspeicher ausgelesen werden sollen. Hierzu dient die Ausgangsschaltung. Diese ist zur Erzeugung eines Lesetaktsignals aus einem von einem Oszillator erzeugten Ausgangstaktsignal für wenigstens einen aus einem Lesezähler bestehenden Leseadressengenerator und zur Bildung von Lesetaktimpulsen nur bei zur Auslesung aus dem Leseadressengenerator zugeordneten Pufferspeicher vorgesehenen Daten des zugeordneten Containers bestimmt.

Des weiteren ist die Ausgangsschaltung noch zur Erzeugung eines Lesetaktsignals bei einem negativen Stopfsignal und zur Unterbrechung der Erzeugung des Lesetaktsignals bei einem positiven Stopfsignal vorgesehen.

Ausführungsbeispiele der Erfindung werden nachstehend anhand der Fig. näher erläutert. Es zeigen:
Fig. 1 eine schematische Darstellung des STM-1-Rahmens mit einem VC-4-Container,
Fig. 2 eine Multiplexstruktur in der synchronen digitalen Hierachie,
Fig. 3 eine schematische Darstellung eines Übertragungssystems für die digitale synchrone Hierachie,
Fig. 4 und 5 Blockschaltbilder von Teilen des Übertragungssystems nach Fig. 3,
Fig. 6 mehrere STM-1-Rahmen mit einem negativen und positiven Stopfvorgang für einen VC-4-Container,
Fig. 7 ein erstes Ausführungsbeispiel einer in Fig. 4 oder 5 verwendeten Anpassungsschaltung,

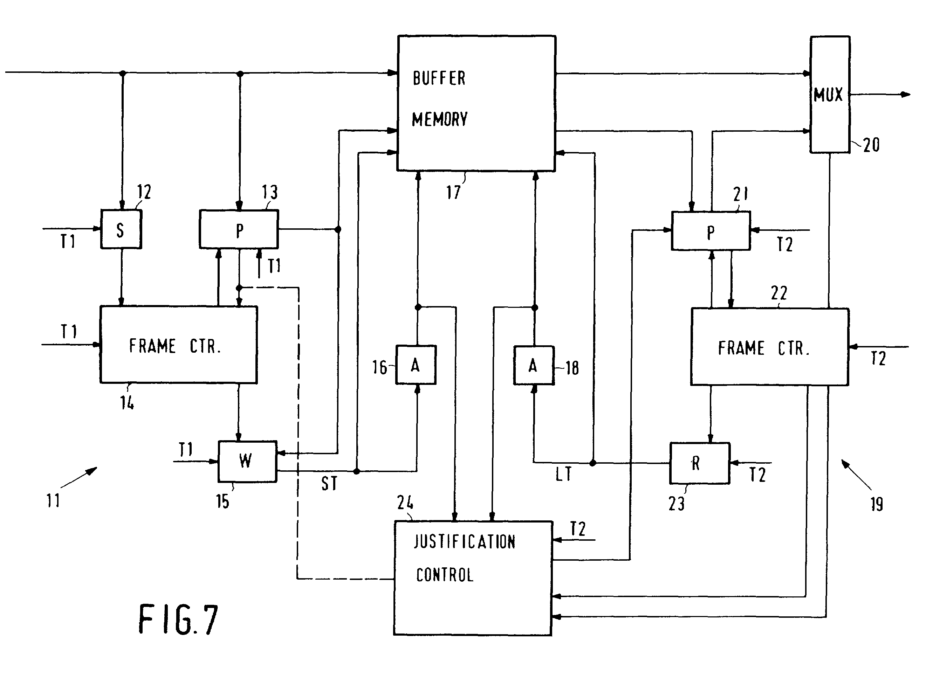

Fig. 7 bis 13 Stopfentscheidungsschaltungen oder Teile davon, die in der Fig. 7 verwendbar sind,

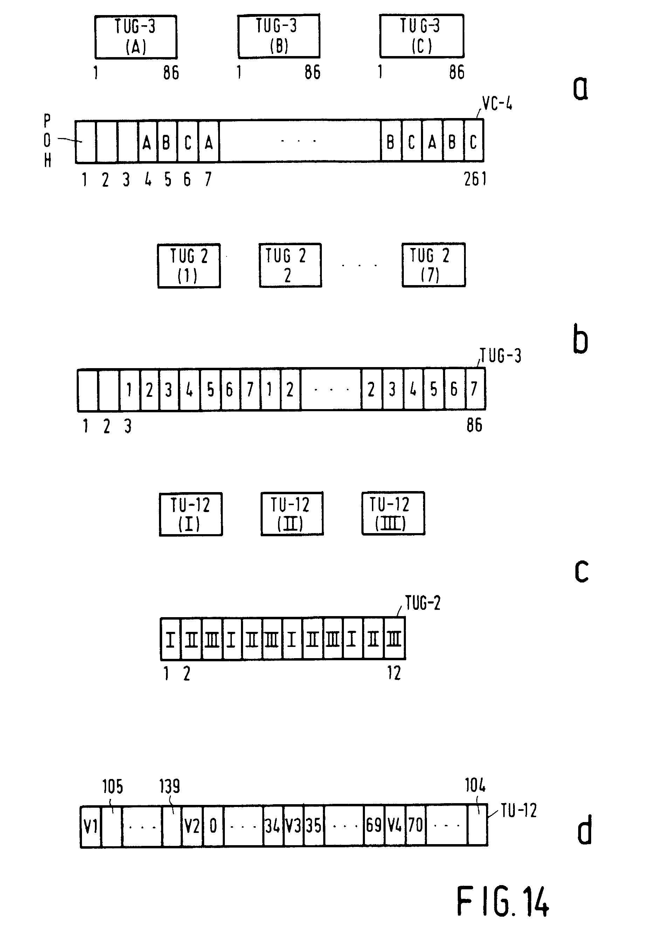

Fig. 14a bis 14b die Strukturierung des VC-12-Containers in einem VC-4-Container und

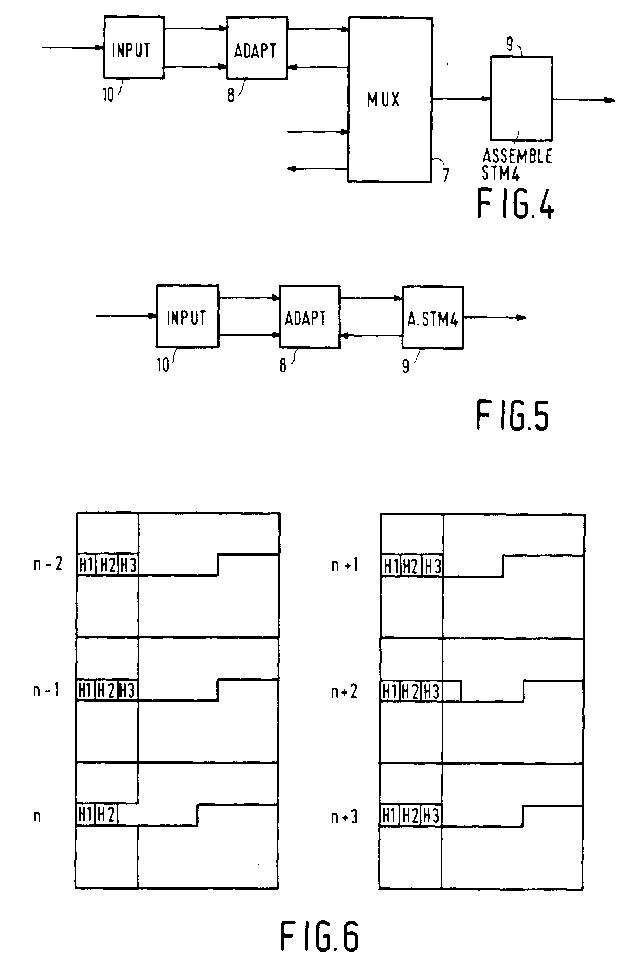

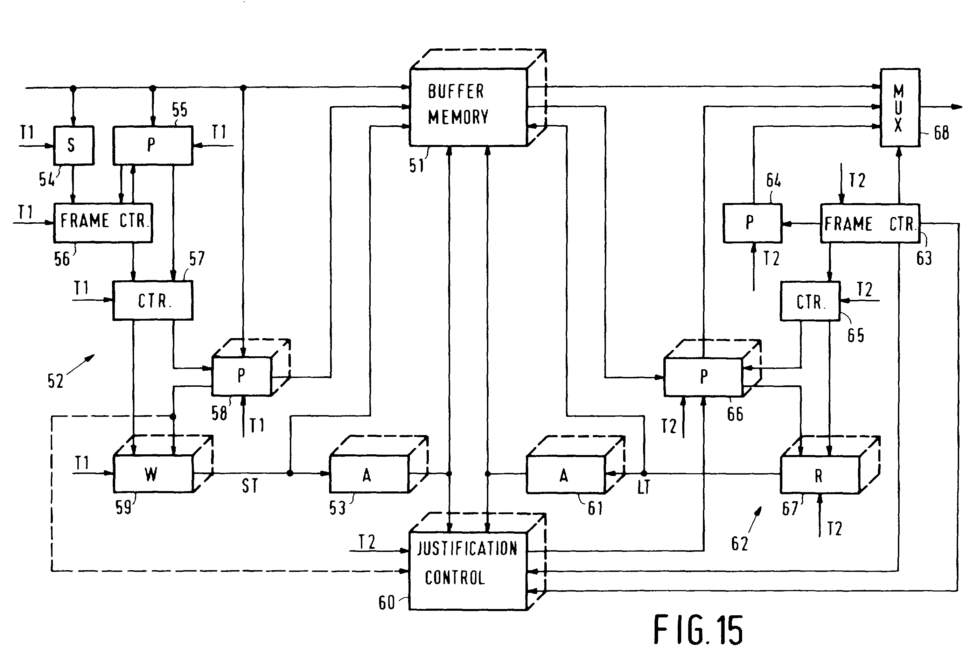

Fig. 15 ein weiteres Ausführungsbeispiel einer Anpassungsschaltung nach Fig. 4 oder 5.

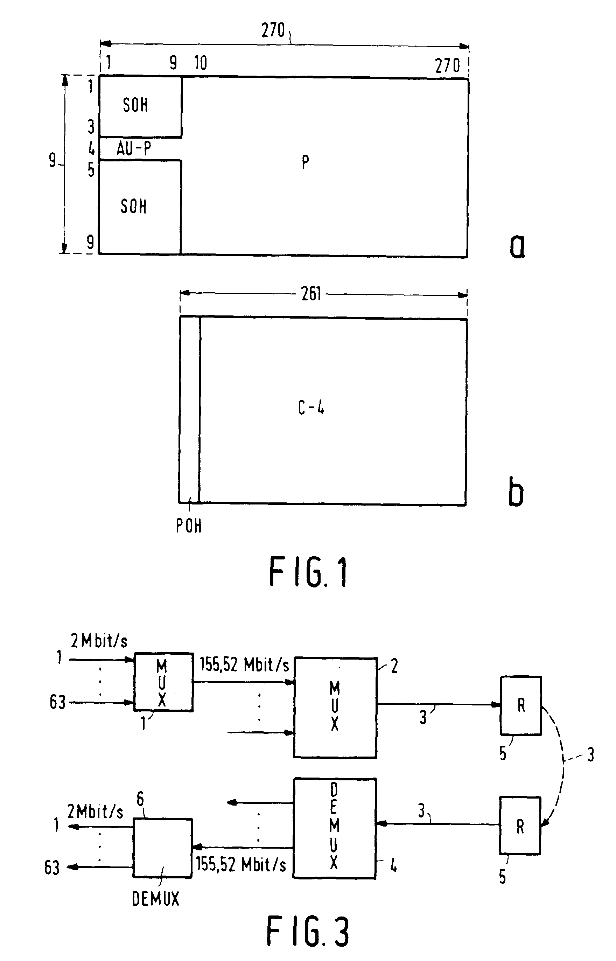

Das in Fig. 3 dargestellte Übertragungssystem für die digitale synchrone Hierachie weist eine Sendeschaltung 1 auf, die 63 2-MBit/s-Signale zu einem 155,52-MBit/s-Signal zusammenfaßt. Diese Signale werden dabei in einem VC-4-Container zusammengefaßt, der in der Fig. 1 näher dargestellt ist. Die Sendeschaltung 1 gibt also ein STM-1-Signal ab. In einer Schaltung 2 werden insgesamt vier STM-1-Signale zu einem STM-4-Signal zusammengebracht, welches über eine optische Übertragungsstrecke 3 zu einer Schaltung 4 gegeben wird, die aus dem STM-4-Signal vier STM-1-Signale bildet. In der optischen Übertragungsstrecke 3 sind noch Schaltungen 5 eingefügt, bei denen ebenfalls eine Taktanpassung stattfindet. Ein STM-1-Signal wird einer Empfangsschaltung 6 zugeführt, die aus dem 155,52-MBit/s-Signal (STM-1-Signal) 63 2-MBit/s-Signale erzeugt.

In der Fig. 4 ist ein Teil der Schaltung 2 dargestellt. Einem Multiplexer 7 werden vier STM-1-Signale von jeweils einer Anpassungsschaltung 8 zugeführt. Der Multiplexer bildet aus vier 155,52-MBit/s-Signalen die von jeweils einer Anpassungsschaltung 8 geliefert werden, ein STM-4-Signal. Der Einfachheit halber ist in der Fig. 4 nur eine Anpassungsschaltung 8 dargestellt. Die Anpassungsschaltung 8 dient zum Ausgleich von Phasenschwankungen und kleinen Frequenzabweichungen, die zwischen einem aus dem Eingangstaktsignal der Anpassungsschaltung 8 abgeleiteten Taktsignal und einem von einem separaten Oszillator abgeleiteten Taktsignal bestehen. Der Anpassungsschaltung 8 wird das Oszillatorsignal über den Multiplexer 7 geliefert. Vor der Anpassungsschaltung 8 ist noch eine Schaltung 10 angeordnet, die zur Taktrückgewinnung, Fehlerauswertung und zum Descrambeln dient. Der aus dem zugeführten STM-1-Signal gewonnene Takt wird der Anpassungsschaltung 8 über eine weitere Leitung zugeführt. Nachdem die vier STM-1-Signale in dem Multiplexer 7 zusammengefaßt worden sind, werden sie in der Schaltung 8 mit einem Takt verkoppelt, verscrambelt, und es findet eine SOH-Einblendung statt. Wie bei der Beschreibung der Fig. 1 erwähnt, ist unter SOH ein "Section Overhead" zu verstehen. Das ist ein Teil im STM-1-Rahmen, der Steuerungs- und Fehlererkennungs-Informationen erhält.

Eine ähnliche Schaltung wie in der Fig. 4 beschrieben, wird auch in einer Schaltung 5 verwendet. Eine solche Schaltung ist in der Fig. 5 dargestellt. Diese weist ebenfalls eine Schaltung 10 auf, die zur Taktrückgewinnung, Fehlerauswertung und zum Descrambeln dient. Die Schaltung 10 liefert der nachgeschalteten Anpassungsschaltung 8 ein Taktsignal, welches aus den der Schaltung 10 zugeführten Daten gewonnen wird. Der Anpassungsschaltung 8 ist die Schaltung 9 nachgeschaltet. Diese liefert der Anpassungsschaltung 8 ein von einem separaten Oszillator abgeleitetes.Taktsignal. Die von der Anpassungsschaltung 8 gelieferten Daten werden in der Schaltung 9 mit einem Takt verkoppelt, verscrambelt und es findet eine SOH-Einblendung statt.

Zum Ausgleich der Phasenschwankungen werden in der Anpassungsschaltung 8 an fest vorgegebenen Stopfstellen entweder negative oder positive Stopfbytes eingefügt. Wie sich ein solcher Stopfvorgang auf den STM-1-Rahmen auswirkt, wird im folgenden anhand der Fig. 6 erläutert. In einem STM-1-Rahmen kann ein VC-4-Container im Nutzinformationsfeld P (STM-1-Payload), an vielen fest vorgegebenen Stellen beginnen. Wann ein solcher VC-4-Rahmen beginnt, ist in den ersten beiden Feldern H1 und H2 der Verwaltungseinheit AU-P enthalten. Jeder VC-4-Container beginnt mit einem Byte, das als "J1" bezeichnet wird. Wenn nicht gestopft werden soll, sind im dritten Feld H3 der Verwaltungseinheit AU-P drei Bytes ohne Information vorhanden. Dies kennzeichnet der Übergang der beiden Rahmen n - 2 und n - 1 in Fig. 6. Bei einem negativen Stopfvorgang, wie er im Rahmen n der Fig. 5 dargestellt ist, wird an der Stopfstelle, an der sonst die drei Bytes von H3 stehen, Nutzinformation übertragen. Bei einem positiven Stopfvorgang, wie er in dem Rahmen n + 2 der Fig. 6 dargestellt ist, werden an den auf das Feld H3 folgenden drei Bytes Nutzinformationen ausgelassen.

In der Fig. 7 ist ein erstes Ausführungsbeispiel für eine Anpassungsschaltung 8 dargestellt. Einer Eingangsschaltung 11, die eine erste Synchronisationsschaltung 12, eine erste Auswerteschaltung 13, einen ersten Rahmenzähler 14 und einen zweiten Rahmenzähler 15 enthält, werden ein Eingangstaktsignal T1 und Daten eines STM-1-Signales zugeführt. Die erste Synchronisationsschaltung 12 ermittelt den Beginn eines STM-1-Rahmens anhand mehrerer Bytes, die am Anfang jedes STM-1-Rahmens stehen. Nachdem die erste Synchronisationsschaltung 12 den Beginn eines STM-1-Rahmens erkannt hat, wird der erste Rahmenzähler 14 auf einen Zähleranfang gesetzt. Dieser erste Rahmenzähler 14 erhöht seinen Zählerinhalt pro Byte eines STM-1-Rahmens. Der erste Rahmenzähler 14 startet und stoppt den zweiten Rahmenzähler 15, der nur dann ein Schreibtaktsignal ST erzeugt, wenn Daten des VC-4-Containers anliegen. Des weiteren steuert der erste Rahmenzähler 14 noch die erste Auswerteschaltung 13, der die Bytes im H1- und H2-Feld zugeführt werden. Die erste Auswerteschaltung 13 erkennt anhand des Inhaltes der Felder H1 und H2 den Beginn eines VC-4-Containers und gibt zu Beginn eines solchen VC-4-Containers einen Impuls zum zweiten Rahmenzähler 15, der daraufhin seinen Zähler auf einen Anfangswert setzt. In den Bytes der H1- und H2-Felder ist auch die Information enthalten, ob eine negative oder positive Stopfstelle auftritt. Eine solche Information über eine negative oder positive Stopfstelle wird von der ersten Auswerteschaltung 13 dem ersten Rahmenzähler 14 mitgeteilt, der daraufhin den zweiten Rahmenzähler 15 eher oder später startet. Bei einer negativen Stopfstelle wird der zweite Rahmenzähler 15 eher gestartet, weil an der Stopfstelle Nutzinformationen vorhanden sind. Bei einer positiven Stopfstelle wird der zweite Rahmenzähler 15 später gestartet.

Der zweite Rahmenzähler 15 führt das von ihm erzeugte Schreibtaktsignal ST einem Schreibadressengenerator 16 zu, der aus einem Schreibzähler besteht. Mit jedem Schreibtaktsignal ST erzeugt der Schreibadressengenerator 16 eine Schreibadresse, unter der die zugehörige Nutzinformation (im VC-4-Container) in einen Pufferspeicher 17 eingeschrieben wird. Dem Pufferspeicher 17 wird außer den Nutzinformationen des STM-1-Signales noch das Schreibtaktsignal ST zugeführt. In den Pufferspeicher 17 wird auch eine Markierung eingelesen, die den Beginn eines VC-4-Containers kennzeichnet und von der ersten Auswerteschaltung 13 geliefert wird. Diese Markierung ist unter der Adresse abgelegt, die die erste Nutzinformation eines VC-4-Containers kennzeichnet.

Zur Auslesung der Daten aus dem Pufferspeicher 17 ist erforderlich, daß Leseadressen und ein Lesetaktsignal LT erzeugt werden. Leseadressen erzeugt ein Leseadressengenerator 18, der aus einem Lesezähler besteht und dem das Lesetaktsignal LT von einer Ausgangsschaltung 19 zugeführt wird. Mit jedem Lesetaktsignal LT werden aus dem Pufferspeicher 17 Nutzinformationen ausgelesen, die zu einem Umschalter 20 geleitet werden. In der Ausgangsschaltung 19 ist eine zweite Auswerteschaltung 21, ein dritter Rahmenzähler 22 und ein vierter Rahmenzähler 23 enthalten, denen ein Ausgangstaktsignal T2 von einem Oszillator zugeführt wird, wie in der Fig. 4 beschrieben ist. Die Dauer eines Taktes des Ausgangstaktsignales entspricht im wesentlichen der Dauer des Auftreten eines Bytes in STM-1-Rahmen. Der dritte Rahmenzähler 22 startet und stoppt den vierten Rahmenzähler 23, der nur dann das Lesetaktsignal LT erzeugt, wenn eine Nutzinformation eines VC-4-Containers aus dem Pufferspeicher 17 ausgelesen werden soll. Des weiteren teilt der dritte Rahmenzähler 22 der zweiten Auswerteschaltung 21 mit, wann die Felder H1 und H2 im STM-1-Rahmen auftreten. Die zweite Auswerteschaltung 21 erhält noch aus dem Pufferspeicher 17 die Markierungsinformation, wann ein VC-4-Container beginnt. Entsprechend dieser Markierungs-Information werden die Bytes der Felder H1 und H2 kodiert.

Des weiteren ist noch eine Stopfentscheidungsschaltung 24 vorhanden, die entscheidet, wann eine negative oder positive Stopfstelle im STM-1-Rahmen auftritt. Diese Information der Stopfentscheidungsschaltung 24 wird der zweiten Auswerteschaltung 21 zugeführt. Das Auftreten einer positiven oder negativen Stopfstelle wird von der zweiten Auswerteschaltung 21 dem dritten Rahmenzähler 22 mitgeteilt, der aufgrund dieser Information den vierten Rahmenzähler 23 eher startet oder stoppt. Des weiteren steuert der dritte Rahmenzähler 22 noch den Umschalter 20, der die Nutzinformation vom Pufferspeicher 17 und die Bytes der Felder H1 und H2 von der zweiten Auswerteschaltung 21 erhält. Bei einer positiven Stopfstelle werden von der zweiten Auswerteschaltung 21 noch drei Bytes zusätzlich abgegeben, die keine Nutzinformation tragen. Bei einer negativen Stopfstelle werden Nutzinformationen vom Pufferspeicher 17 drei Bytes eher abgegeben. Der dritte Rahmenzähler 22 erzeugt noch ein Taktsignal, ein Rahmentaktsignal und ein Zeilentaktsignal, welche der Stopfentscheidungsschaltung 24 zugeführt werden. Die Dauer eines Zeilentaktes ist gleich der Dauer einer Zeile, die Dauer eines Rahmentaktes ist gleich der Dauer eines Rahmens und die Dauer eines Taktsignales gleich der Dauer von vier STM-1-Rahmen. Die Stopfentscheidungsschaltung 24 erhält auch noch die Stopfinformation von der ersten Auswerteschaltung 13, ob eine positive, negative oder keine Stopfstelle vorliegt.

Die Schaltungselemente 12 bis 15 der Eingangsschaltung 11 und die Schaltelemente 21 bis 23 der Ausgangsschaltung 19 bestehen aus Prozessorbausteinen, die ein Programm ausführen. Im folgenden ist für jedes Schaltungsselement 12 bis 15 und 21 bis 23 ein schematisch skizzierter Programmablauf dargestellt:

Erste Synchronisationsschaltng 12:
1. Ermittle den Beginn des STM-1-Rahmens aus Daten;
2. Setze ersten Rahmenzähler 14 auf Zähleranfang, wenn Rahmenbeginn erkannt;

Erster Rahmenzähler 14:
1. Wenn Zähleranfang vorliegt, setze Zählerinhalt auf Null;
2. Erhöhe Zählerinhalt um eine Einheit;
3. Wenn VC-4-Daten oder eine negative Stopfstelle vorliegt, dann starte zweiten Rahmenzähler 15;
4. Wenn keine VC-4-Daten oder eine postive Stopfstelle vorliegt, dann stoppe den zweiten Rahmenzähler 15;
5. Teile der ersten Auswerteschaltung 13 den Beginn der H1- und H2-Felder mit;

Erste Auswerteschaltung 13:
1. Bei Vorliegen der H1- und H2-Felder ermittle deren Inhalt;
2. Teile dem ersten Rahmenzähler 14 und gegebenenfalls der Stopfentscheidungsschaltung 24 mit, ob eine negative oder positive oder keine Stopfstelle vorliegt;
3. Starte Zählvorgang bis zum Erreichen des Anfanges des VC-4-Containers;
4. Nach Erreichen des Anfangs des VC-4-Containers, sende eine Markierung an den Pufferspeicher 15 und setze zweiten Rahmenzähler 15 auf Zähleranfang;

Zweiter Rahmenzähler 15:
1. Wenn Zähleranfang vorliegt, setze Zählerinhalt auf Null;
2. Wenn Start vom ersten Rahmenzähler 14 freigegeben ist, erhöhe Zählerinhalt um eine Einheit; sonst verbleibe bei altem Zählerinhalt;
3. Gib bei jeder Erhöhung des Zählerinhaltes einen Takt des Schreibtaktsignales ST aus;

Zweite Auswerteschaltung 22:
1. Bilde die H1-, H2-, H3-Felder und gegebenenfalls eine positive Stopfstelle anhand der Markierungsinformation aus dem Pufferspeicher 17 und der Stopfentscheidung der Stopfentscheidungsschaltung 24;
2. Teile dem dritten Rahmenzähler 22 die Stopfinformation mit und gibt die Markierungsinformation an dritten Rahmenzähler 22;

Dritter Rahmenzähler 22:
1. Setze bei Beginn eines STM-1-Rahmens Zähleranfang auf Null;
2. Erhöhe Zählerinhalt um eine Einheit;
3. Setze bei Auftreten einer Markierung den vierten Rahmenzähler 23 auf Zähleranfang;
4. Wenn VC-4-Daten oder eine negative Stopfstelle vorliegt, starte zweiten Rahmenzähler 15;
5. Wenn keine VC-4-Daten oder eine positive Stopfstelle vorliegt, dann stoppe den zweiten Rahmenzähler 15;
6. Teile der zweiten Auswerteschaltung den Beginn des H1- und H2-Feldes mit;
7. Verbinde Ausgang des Pufferspeichers 17 mit dem Ausgang des Umschalters 20, wenn VC-4-Daten vorliegen; Verbinde Ausgang der zweiten Auswerteschaltung 21 mit dem Ausgang des Umschalters 20, wenn H1-, H2- und H3-Felder und eine positive Stopfstelle vorliegt;
8. Erzeuge Taktsignale und ein Anhaltesignal für die Stopfentscheidungsschaltung 24;

Vierter Rahmenzähler 23:
1. Wenn Zähleranfang vorliegt, setze Zählerinhalt auf Null;
2. Wenn Start vom dritten Rahmenzähler 22 freigegeben ist, erhöhe Zählerinhalt um eine Einheit; sonst verbleibe bei altem Zählerinhalt;
3. Gib bei jeder Erhöhung des Zählerinhalts einen Takt des Lesetaktsignales LT aus.

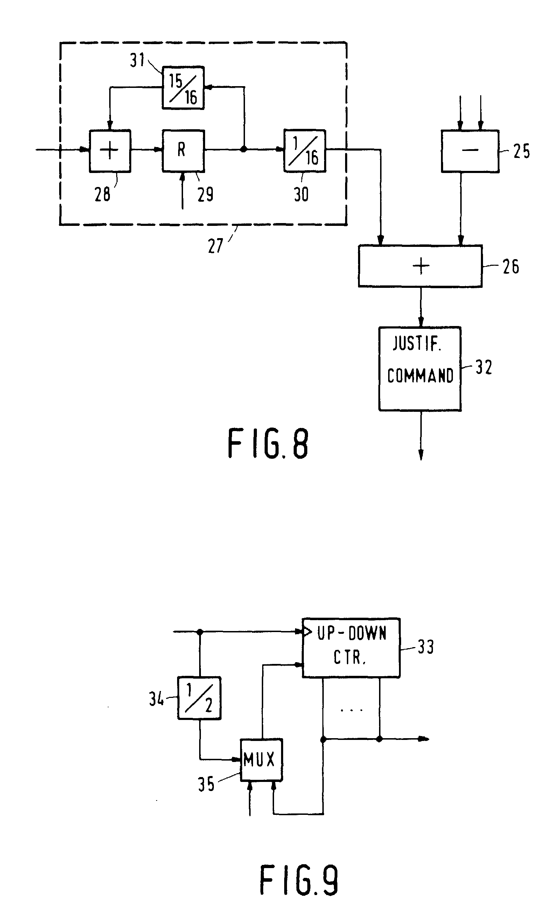

Im folgenden wird ein erstes Ausführungsbeispiel der Stopfentscheidungsschaltung 24 anhand der Fig. 8 erläutert. Die Schreibadressen des Schreibadressengenerators 16 und die Leseadressen des Leseadressengenerators 18 werden einem Subtrahierer 25 zugeführt, der einen Differenzwert bildet. Bei einem halben Füllstand des Pufferspeichers 17 ist der vom Subtrahierer 25 abgegebene Differenzwert gleich Null. Der Differenzwert wird einem Eingang eines Addierers 26 zugeführt. Dem anderen Eingang des Addierers 26 wird ein Ausgangssignal eines Tiefpaßfilters 27 zugeleitet. Das Tiefpaßfilter 27 erhält die Stopfentscheidung von der ersten Auswerteschaltung 13. Diese Stopfentscheidung wird einem in dem Tiefpaßfilter 27 befindlichen Addierer 28 zugeführt. Die Ausgangswerte des Addierers 28 werden in einem Register 29 zwischengespeichert, dem ein Taktsignal zugeführt wird (Periodendauer: 2ms), einem Multiplizierer 30 und einem Multiplizierer 31 zugeführt. Im Multiplizierer 31 wird das Ausgangssignal des Registers 29 mit einem ersten Faktor multipliziert, dessen Betrag gleich 15/16 ist. Dieses im Multiplizierer 31 gewonnene Signal wird ebenfalls auf den Addierer 28 zurückgeführt. Im Multiplizierer 30 wird das Ausgangssignal des Registers 29 mit einem zweiten Faktor multipliziert, dessen Betrag 1/16 ist. Die Ausgangswerte des Multiplizierers 30 stellen die tiefpaßgefilterten Werte der Stopfinformation von der Auswerteschaltung 13 dar. Der erste und der zweite Faktor in den Multiplizierern 30 und 31 sind so gewählt, daß das Tiefpaßfilter 27 eine große Zeitkonstante aufweist. Die im Addierer 26 zusammengefaßten Werte werden einem zweiten Schaltungsteil 32 der Stopfentscheidungsschaltung 24 zugeführt. Das zweite Schaltungsteil 32 gibt das Stopfsignal ab, das nur dann erzeugt wird, wenn eine positive oder negative Stopfstelle vorliegt.

Durch das Tiefpaßfilter 27 wird bei einer Häufung von Pointer-Aktionen (z.B. positive Stopfaktionen) eine gleichmäßigere Verteilung der Stopfaktionen über einen gewissen Zeitraum erreicht. Dadurch kann ein Überlaufen eines Pufferspeichers auf der Empfangsseite des Übertragungssystems und damit ein Datenverlust vermieden werden.

Ein anderes Tiefpaßfilter 27 ist in der Fig. 9 gezeigt. Dieses Tiefpaßfilter enthält einen Vorwärts-/Rückwärts-Zähler 33, dessen Takteingang beispielsweise ein Taktsignal, welches von dem dritten Rahmenzähler 22 erzeugt werden kann, zugeführt wird. Dieses Taktsignal hat eine Periodendauer von 0,25 ms und weist somit die doppelte Frequenz des Rahmentaktsignales auf, dessen Periodendauer 0,5 ms beträgt. Das dem Zähler 33 zugeführte Taktsignal wird über einen Teiler 34, der das Taktsignal um die Hälfte teilt, einer Umschaltvorrichtung 35 zugeführt. Der Ausgang der Umschaltvorrichtung ist mit dem Vorwärts-/-Rückwärtseingang des Zählers 33 verbunden. Ein Eingang der Umschaltvorrichtung 35 erhält das Rahmentaktsignal und der andere Eingang das Vorzeichen des Zählers 33. Die Zählerausgänge geben das tiefpaßgefilterte Stopfinformationssignal der Auswerteschaltung 13 ab.

In den Fig. 8 und 9 bewirkt das Tiefpaßfilter 27 eine Tiefpaßfilterung der Pointer-Aktionen von der vorhergehenden Anpassungsschaltung 8 (beispielsweise in einer vorhergehenden Schaltung 5). Ein Tiefpaßfilter kann jedoch in der Stopfentscheidungsschaltung 24 so angeordnet werden, daß es auch die Information über den Phasenunterschied zwischen dem Lesetaktsignal LT und dem Schreibtaktsignal ST berücksichtigt.

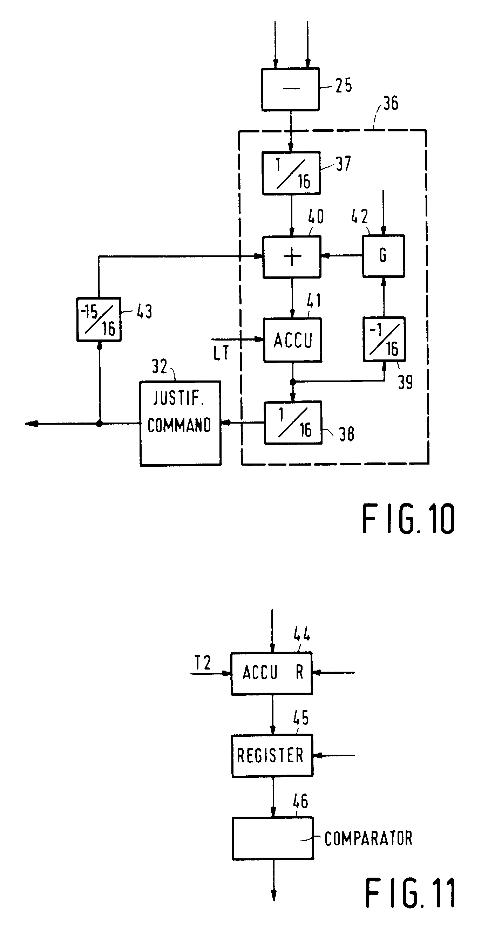

Der in Fig. 10 dargestellte Subtrahierer 25 liefert Differenzwerte einem Tiefpaßfilter 36, welches drei Multiplizierer 37, 38 und 39, einen Addierer 40, einen Akkumulator 41 und eine Torschaltung 42 enthält. Die vom Subtrahierer 25 gelieferten Differenzwerte werden in dem Multiplizierer 37 mit einem dritten Faktor, dessen Betrag gleich 1/16 ist, multipliziert. Die Ausgangswerte des Multiplizierers 37 werden in einem Addierer 40 mit weiteren Ausgangswerten von anderen Schaltungselementen addiert. Die Ausgangswerte des Addierers 40 werden in einem Akkumulator 41 akkumuliert. Dabei findet im Akkumulator 41 eine Verschiebung um 11 Bit in Richtung höherwertige Ausgänge statt (Division durch 2048). Im Akkumulator 41 findet also eine Mittelwertbildung statt. Der Akkumulator 41 wird mit dem Lesetaktsignal LT getaktet. Der Ausgang des Akkumulators 41 ist mit den Multiplizierern 38 und 39 verbunden. Im Multiplizierer 39 wird eine Multiplikation mit dem negativen dritten Faktor, d.h. mit einem Wert -1/16 durchgeführt. Der Ausgangswert des Multiplizierers 39 wird nur während jedes vierten Rahmens einmal über die Torschaltung 42 zum Addierer 40 geführt. Die Torschaltung 42 wird mit einem Taktsignal freigegeben, dessen Periodendauer die vierfache Periodendauer des Rahmentaktsignals ist. Im Multiplizierer 38 wird ebenfalls eine Multiplikation des Ausgangswertes des Akkumulators 41 mit dem dritten Faktor durchgeführt. Der Ausgang des Multiplizierers 38 liefert tiefpaßgefilterte Werte, die dem zweiten Schaltungsteil 32 der Stopfentscheidungsschaltung 24 zugeführt werden. In Abhängigkeit von der Stopfentscheidung wird diese mit einem fünften Faktor, dessen Betrag gleich -15/16 ist, in einem Multiplizierer 43 multipliziert und auf einen Eingang des Addierers 40 zurückgekoppelt. Die Tiefpaßfilterung wirkt über die Schreib- und Leseadressengeneratoren 16 und 18 auf die Stopfentscheidung ein, welche die Taktanpassung in der Anpassungsschaltung 8 betrifft. Um diese Einwirkung bezüglich der Filterung zu vermindern, wird daher die Rückkopplung und Multiplikation in dem Multiplizierer 43 durchgeführt.

Der zweite Schaltungsteil kann nur ein Register enthalten, in dem das an ihrem Eingang anliegende Signal mit einem Rahmentakt in dem Register zwischengespeichert wird und anschließend eine Entscheidung in einem Komparator über einen möglichen Stopfvorgang stattfindet. Zur Verhinderung des niederfrequenten Jitters, der sich insbesondere auf der Empfangsseite des Übertragungssystems auswirkt, ist in Fig. 11 eine erste Ausführungsform für einen zweiten Schaltungsteil 32 dargestellt. Ein Akkumulator 44 erhält die Eingangswerte, die akkumuliert werden. Für die Ausführungsbeispiele nach der Fig. 8 und 9 findet eine Akkumulation über eine bestimmte Dauer statt (Mittelwertbildung). In der Realisierung der Fig. 10 kann der Akkumulator 44 wegfallen, da die Mittelwertbildung schon im Tiefpaßfilter 36 durchgeführt wird. Akkumuliert wird mit jedem Takt des Lesetaktsignales LT. Die bestimmte Dauer beträgt eine Zeile. Nach einer Zeile wird der Akkumulator 44 durch ein Zeilentaktsignal auf Null zurückgesetzt. Das Akkumulationsergebnis über eine Zeile wird am Ende eines Rahmens von einem Register 45 übernommen. Diesem Register wird das Rahmentaktsignal zugeführt. Die Dauer einer Mittelwertbildung ist gleich der Dauer einer Zeile. Zur Mittelwertbildung wird jedoch nur die letzte Zeile des Rahmens benötigt. Diese Übernahme des Mittelwertes erfolgt am Ende eines Rahmens in das Register 45. In einem nachgeschalteten Komparator 46 wird das im Register 45 gespeicherte Ergebnis mit einem niedrigen und einem hohen Extremwert verglichen. Wird der niedrige Extremwert unterschritten, so wird ein negatives Stopfsignal und wird der hohe Extremwert unterschritten, so wird ein positives Stopfsignal erzeugt. Die beiden Extremwerte sind so gewählt, daß bei den möglichen Phasenschwankungen und zur Verfügung stehenden Stopfstellen eine ausreichende Anpassung des Signals an das Lesetaktsignal erfolgen kann (vgl. CCITT Recommandation G 783).

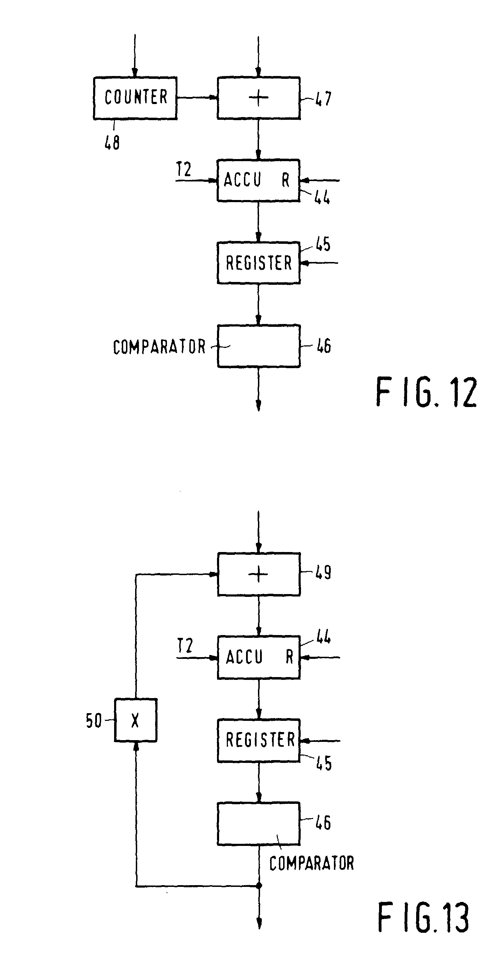

Eine weitere Ausführungsform eines zweiten Schaltungsteils 32 ist in Fig. 12 gezeigt. Die Eingangswerte des zweiten Schaltungsteils 32 werden einem Addierer 47 zugeleitet. Dieser erhält noch Werte von einem Zähler 48, der von einem Rahmentaktsignal getaktet wird. über mehrere Rahmentakte ergibt sich somit ein sägezahnförmiger Verlauf der Ausgangswerte des Zählers 48. Die Ausgangswerte des Addierers 47 werden dem Akkumulator 44 zugeführt, der die Ausgangswerte über eine Zeile akkumuliert. Für die Stopfentscheidungsschaltung 24 nach Fig. 10 ist der Akkumulator 44 nicht notwendig. Das Akkumulationsergebnis wird am Ende eines Rahmens durch ein Rahmentaktsignal in das Register 45 übernommen. In dem nachfolgenden Komparator 46 wird dann, wie in der Fig. 11 beschrieben ist, entschieden, ob ein negatives oder positives Stopfsignal erzeugt wird. Mit der zweiten Ausführungsform wird eine weitere Reduzierung der niederfrequenten Spektralanteile im Jitter erreicht.

Am weitesten können die niederfrequenten Spektralanteile im Jitter mit der Schaltungsanordnung, die im folgenden mit Hilfe der Fig. 13 beschrieben wird, erreicht werden. Die Eingangswerte des zweiten Schaltungsteils 32 werden einem Addierer 49 zugeführt, der jeden Eingangswert mit einem weiteren von einem Multiplizierer 50 stammenden Ausgangswert addiert. In dem Multiplizizerer 50 wird das negative oder positive Stopfsignal, welches der Komparator 46 abgibt, mit einem konstanten Faktor multipliziert. Der Faktor bewirkt eine Stabilisierung der Anpassungsschaltung 8, und er sollte so gewählt werden, daß nach einem Stopfvorgang, der durch ein Stopfsignal bewirkt wird, der Ausgangswert des Addierers 49 sich gegenüber dem Eingangswert des zweiten Schaltungsteils 32 das Ein- bis Zweifache ändert. Beispielsweise kann der Wert den Betrag von 2 aufweisen. Anschließend wird wie bei den beiden Schaltungsteilen 32 nach den Fig. 11 und 22 eine Akkumulation in dem Akkumulator 44 (kann bei Fig. 10 wegfallen) und eine Speicherung im Register 45 vorgenommen. Bei dieser Ausführungsform in der Fig. 13 sollten die beiden Extremwerte des Komparators 46 einen Abstand von einen Byte aufweisen.

Bei dem in Fig. 7 beschriebenen Ausführungsbeispiel einer Anpassungsschaltung 8 (Fig. 4 und 5) ist auf einen Stopfvorgang für einen VC-4-Container eingegangen worden. Im Anschluß soll eine Anpassungsschaltung 8 beschrieben werden, die Stopfvorgänge für VC-12-Container vorsieht. In den Fig. 14a bis d ist die Verschachtelung der VC-12-Container in einem VC-4-Container dargestellt. In Fig. 14a ist ein VC-4-Container gezeigt, in dem jeweils drei TUG-3-Container enthalten sind. In dem ersten Rahmen des VC-4-Container ist der POH enthalten. Die Rahmen 2 und 3 weisen Byts ohne Inhalt auf und in den folgenden Rahmen sind jeweils abwechselnd Rahmen der drei TUG-3-Container enthalten. So ist beispielsweise im vierten Rahmen des VC-4-Containers der erste Rahmen des ersten TUG-3-Containers, im fünften Rahmen der erste Rahmen des zweiten TUG-3-Containers und im sechsten Rahmen der erste Rahmen des dritten TUG-3-Containers enthalten.

Wie Fig. 14b zeigt, besteht ein TUG-3-Container aus einer Verschachtelung von sieben TUG-2-Containern. In dem TUG-3-Container sind die ersten beiden Rahmen durch Bytes ohne Inhalt gefüllt, und in den darauffolgenden Rahmen werden jeweils abwechselnd Rahmen der TUG-2-Container eingefügt. Ein TUG-2-Container besteht aus drei TU-12-Containern. In den TUG-2-Containern werden abwechselnd Rahmen der drei TU-12-Container eingefügt. Ein TU-12-Container ist gegenüber einem VC-12-Container durch zusätzliche Pointer-Bytes ergänzt. Wie Fig. 14d zeigt, besteht ein TU-12-Container aus jeweils vier Untereinheiten von jeweils 36 Bytes, wobei eine Untereinheit durch ein Pointer-Byte und 35 weitere Bytes gefüllt ist. In einem STM-1-Rahmen wird dabei zuerst die erste Untereinheit, beim nächsten Rahmen die zweite Untereinheit, beim dritten Rahmen die dritte Untereinheit und beim vierten Rahmen die vierte Untereinheit eingefügt. Eine positive Stopfstelle ist in dem TU-12-Container an der Stelle, die mit 35 bezeichnet ist, enthalten. Die negative Stopfstelle ist das Pointer-Byte V3. Ein VC-12-Container wird mit einem Byte, das mit V5 bezeichnet ist, begonnen. Dieses Byte könnte beispielsweise an der Stelle, die mit "0" bezeichnet ist, stehen.

Eine Anpassungsschaltung 8 (Fig. 4 und 5), die zur Stopfung bei VC-12-Containern geeignet ist, ist in der Fig. 15 dargestellt. Da in einem VC-4-Container 63 VC-12-Container enthalten sind, ist für jeden VC-12-Container ein Pufferspeicher 51 vorhanden. Jeder Schreibvorgang eines Pufferspeichers 51 wird von einer Eingangsschaltung 52 und von Schreibadressengeneratoren 53 gesteuert. Die Eingangsschaltung 52 enthält eine zweite Synchronisationsschaltung 54, eine dritte Auswerteschaltung 55, einen fünften Rahmenzähler 56, einen sechsten Rahmenzähler 57, 63 erste Unterauswerteschaltungen 58 und 63 erste Unterrahmenzähler 59. Alle Schaltungen 54 bis 59 in der Eingangsschaltung 52 erhalten das Eingangstaktsignal T1. In der zweiten Synchronisationsschaltung 54 wird der Rahmenanfang anhand mehrerer Bytes am Anfang eines STM-1-Rahmens festgestellt. Dann wird der fünfte Rahmenzähler 56 von der zweiten Synchronisationsschaltung 54 gestartet. In der dritten Auswerteschaltung 55 wird durch Auswertung der Felder H1 und H2 festgestellt, wo der Startpunkt des VC-4-Containers liegt. Dazu wird der dritten Auswerteschaltung 55 vom fünften Rahmenzähler 56 die Position der Felder H1 und H2 mitgeteilt. Falls sich durch Auswertung der Felder H1 und H2 ergibt, daß eine negative oder positive Stopfstelle vorhanden ist, wird dies dem fünften Rahmenzähler 56 von der dritten Auswerteschaltung 55 mitgeteilt. Der fünfte Rahmenzähler 56 startet und stoppt den sechsten Rahmenzähler 57. Der sechste Rahmenzähler 57 erzeugt ein Taktsignal für die ersten Unterrahmenzähler 59. Der sechste Rahmenzähler 57 gibt dabei nur dann ein Taktsignal ab, wenn Daten des VC-4-Containers vorhanden sind. Den ersten Unterauswerteschaltungen 58 werden noch vom sechsten Rahmenzähler 57 die zeitliche Lage der Bytes V1 bis V4 der VC-12-Container und die zeitliche Lage eines H4-Bytes im POH des VC-4-Containers mitgeteilt. Das H4-Byte gibt an, welches der Bytes V1 bis V4 vorliegt, und die Pointer-Bytes V1 und V2 geben die Position des V5-Bytes einem VC-12-Container an. Die ersten Unterauswerteschaltungen 58 teilen den zugeordneten ersten Unterrahmenzählern 59 den Beginn eines VC-12-Containers mit. Außerdem wird durch Auswertung der Pointer-Bytes V1 und V2 ermittelt, ob negative oder positive Stopfstellen in einem VC-12-Container vorhanden sind. Den Beginn eines VC-12-Containers wird in jedem zugeordneten Pufferspeicher 51 durch eine Markierung von der zugeordneten ersten Unterauswerteschaltung 58 gekennzeichnet.

Die ersten Unterrahmenzähler 59 erzeugen Schreibtaktsignale ST für den jeweiligen zugeordneten Pufferspeicher 51 und den jeweiligen zugeordneten Schreibadressengenerator 53. Unter der von einem Schreibadressengenerator 53 erzeugten Schreibadresse wird eine Nutzinformation in den Pufferspeicher 51 eingeschrieben. Der Schreibadressenausgang jedes Schreibadressengenerators 53 ist mit Stopfentscheidungsschaltungen 60 verbunden. Jedem Pufferspeicher 51 und jeder Stopfentscheidungsschaltung 60 sind noch Leseadressengeneratoren 61 zugeordnet, die jeweils Leseadressen für den Auslesevorgang aus einem Pufferspeicher 51 erzeugen. Gesteuert werden die Leseadressengeneratoren 61 über ein Lesetaktsignal LT von einer Ausgangsschaltung 62.

Die Ausgangsschaltung 62 enthält einen siebten Rahmenzähler 63, eine vierte Auswerteschaltung 64, einen achten Rahmenzähler 65, 63 zweite Unterauswerteschaltungen 66 und 63 zweite Unterrahmenzähler 67. Jede dieser Schaltungen in der Ausgangsschaltung 62 erhalten ein Ausgangstaktsignal T2. Der siebte Rahmenzähler 63 startet und stoppt den achten Rahmenzähler 65, der Taktsignale erzeugt, wenn Daten des VC-4-Containers ausgelesen werden sollen. Des weiteren gibt der siebte Rahmenzähler 63 die Position der Felder H1 und H2 an. Der siebte Rahmenzähler 63 führt auch den Stopfentscheidungsschaltungen 60 ein Rahmentaktsignal und ein Anhaltesignal zu. Die Stopfentscheidungsschaltungen 60 sind nur während eines STM-1-Rahmens aktiv und werden über 15 STM-1-Rahmen durch das Anhaltesignal angehalten. Es sei noch erwähnt, daß von jeder ersten Unterauswerteschaltung 58 der zugeordneten Stopfentscheidungsschaltung 60 gegebenenfalls eine Stopfinformation zugeführt wird, die beispielsweise in einem Tiefpaßfilter 27 nach Fig. 8 tiefpaßgefiltert wird. Das Anhaltesignal kann beispielsweise verhindern, daß den zweiten Unterauswerteschaltungen 66 ein Stopfsignal zugeführt wird.

Die vierte Auswerteschaltung 64 führt einem Umschalter 51 jeweils die Bytes der Felder H1 und H2 zu und gibt den Anfang eines VC-4-Containers an. Des weiteren gibt die vierte Auswerteschaltung 64 dem achten Rahmenzähler 65 noch den Beginn eines VC-4-Containers an, der, da nur Stopfstellen innerhalb der TU-12-Container vorkommen, immer an der gleichen Stelle liegt. Der achte Rahmenzähler 65 gibt ein Taktsignal an die zweiten Unterrahmenzähler 67, die die Lesetaktsignale LT für die Leseadressengeneratoren 61 erzeugen. Des weiteren gibt der achte Rahmenzähler 65 noch die zeitliche Lage der Pointer-Byts V1 bis V4 an die zweiten Unterauswerteschaltungen 66. Die Stopfentscheidungsschaltungen 60, die in den Fig. 8 bis 13 dargestellt sind, geben das Stopfsignal an die zweiten Unterauswerteschaltungen 66 ab. Es sei noch erwähnt, daß hierbei die Mittelungsdauer, d.h. die Dauer einer Akkumulation, der Dauer eines STM-1-Rahmens entspricht. Anhand der Stopfsignale entscheiden die zweiten Unterauswerteschaltungen 66, ob eine negative oder positive Stopfstelle in den TU-12-Containern vorhanden ist. Eine solche Stopfstelle wird noch den zweiten Unterrahmenzählern 67 mitgeteilt, die daraufhin eher oder später mit der Erzeugung eines Lesetaktsignales LT beginnen. Die zweiten Unterauswerteschaltungen 66 liefern an den Umschalter 68 die Pointer-Byts V1 bis V4. Außerdem erhält der Umschalter 68 noch die Nutzinformation bzw. Daten aus den Pufferspeichern 51. Gesteuert wird der Umschalter 68 von dem siebten Rahmenzähler 63.

Auch bei dem Ausführungsbeispiel einer Anpassungsschaltung 8 nach Fig. 15 bestehen die Schaltungselemente 54 bis 59 der Eingangsschaltung 52 und die Schaltungselemente 63 bis 67 der Ausgangsschaltung 62 aus Prozessorbausteinen, die ein fest gespeichertes Programm ausführen.

Im folgenden ist für jedes Schaltungselement 54 bis 59 und 63 bis 67 ein schematisch skizzierter Programmablauf dargestellt:

Zweite Synchronisationsschaltung 54:
1. Ermittle den Beginn des STM-1-Rahmens aus Daten;
2. Setze fünften Rahmenzähler 56 auf Zähleranfang, wenn Rahmenanfang erkannt;

Fünfter Rahmenzähler 56:
1. Wenn Zähleranfang vorliegt, setze Zählerinhalt auf Null;
2. Erhöhe Zählerinhalt um eine Einheit;
3. Wenn VC-4-Daten oder eine negative Stopfstelle (VC-4-Container) vorliegen, dann starte sechsten Rahmenzähler 57;
4. Wenn keine VC-4-Daten oder eine positive Stopfstelle (VC-4-Container) vorliegen, dann stoppe den sechsten Rahmenzähler 57;
5. Teile der dritten Auswerteschaltung 55 den Beginn des H1- und H2-Feldes mit;

Dritte Auswerteschaltung 55:
1. Bei Vorliegen der H1- und H2-Felder ermittle deren Inhalt;
2. Teile dem fünften Rahmenzähler 56 mit, ob eine und welche Stopfstelle vorliegt (VC-4-Container);
3. Starte Zählvorgang bis zum Erreichen des Anfangs des VC-4-Containers;
4. Nach Erreichen des Anfangs des VC-4-Containers setze fünften Rahmenzähler 56 auf Zähleranfang;

Sechster Rahmenzähler 57:
1. Wenn Zähleranfang vorliegt, setze Zählerinhalt auf Null;
2. Wenn Start vom fünften Rahmenzähler 56 freigegeben ist, erhöhe Zählerinhalt um eine Einheit; sonst verbleibe beim alten Zählerinhalt;
3. Gib bei jeder Erhöhung des Zählerinhaltes einen Takt des Taktsignals an die ersten Unterrahmenzähler 59;
4. Teile den ersten Unterauswerteschaltungen 58 die zeitliche Lage der Pointer-Bytes V1 bis V4 der VC-12-Container und des Bytes H4 im POH des VC-4-Containers mit;
5. Gib den ersten Unterauswerteschaltungen 58 an, ob Daten des zugeordneten VC-12-Containers vorliegen;

Erste Unterauswerteschaltungen 58:
1. Ermittle den Inhalt der V1- und V2-Pointer-Bytes;
2. Teile den zugeordneten ersten Unterrahmenzählern 59 den Beginn eines VC-12-Containers mit; setze damit den Zählerinhalt des zugeordneten ersten Unterrahmenzählers 59 auf Zähleranfang;
3. Nach Erreichen des Anfangs eines VC-12-Containers sende Markierung zu den zugeordneten Pufferspeicher 51;
4. Wenn Daten des zugeordneten VC-12-Containers oder eine negative Stopfstelle vorliegt, dann starte zugeordneten ersten Unterrahmenzähler 59;
5. Wenn keine Daten des zugeordneten VC-12-Containers oder eine positive Stopfstelle vorliegt, dann stoppe zugeordneten ersten Unterrahmenzähler 59;
6. Teile gegebenenfalls der zugeordneten Stopfentscheidungsschaltung 60 mit, ob negative, positive oder keine Stopfstelle vorliegt;

Erster Unterrahmenzähler 59:
1. Wenn Zähleranfang vorliegt, setze Zählerinhalt auf Null;
2. Wenn Start von zugeordneter erster Unterauswerteschaltung 58 freigegeben, erhöhe Zählerinhalt um eine Einheit; sonst verbleibe bei altem Zählerinhalt;
3. Gib bei jeder Erhöhung des Zählerinhaltes einen Takt des Schreibtaktsignales ST aus;

Siebter Rahmenzähler 58:
1. Setze bei Beginn eines STM-1-Rahmens Zähleranfang auf Null;
2. Erhöhe Zählerinhalt um eine Einheit;
3. Setze bei Beginn des VC-4-Rahmens den achten Rahmenzähler 65 auf Zähleranfang und gib vierter Auswerteschaltung 64 eine Information darüber;
4. Wenn Daten des VC-4-Containers vorliegen, starte den achten Rahmenzähler 65;
5. Wenn keine Daten des VC-4-Containers vorliegen, stoppe den achten Rahmenzähler 65;
6. Teile der vierten Auswerteschaltung 64 den Beginn der H1- und H2-Felder mit;
7. Verbinde Ausgang eines Pufferspeichers 51 mit dem Ausgang des Umschalters 68, wenn Daten des zugeordneten VC-12-Containers vorliegen; Verbinde Ausgang der vierten Auswerteschaltung 64 mit dem Ausgang des Umschalters 68, wenn H1-, H2- und H3-Felder vorliegen; Verbinde Ausgang einer zweiten Unterauswerteschaltung 66 mit dem Ausgang des Umschalters 68, wenn die V1- bis V4-Pointer-Bytes und das H4-Feld vorliegen;
8. Erzeuge ein Anhalte-, ein Rahmentakt- und ein Zeilentaktsignal für die Stopfentscheidungsschaltungen 60;

Vierte Auswerteschaltung 64:
1. Bilde H1-, H2- und H3-Felder anhand der Information des siebten Rahmenzählers 58 über den Beginn des VC-4-Rahmens;

Achter Rahmenzähler 65:
1. Wenn kein Zähleranfang vorliegt, sezte Zählerinhalt auf Null;
2. Wenn Start vom siebten Rahmenzähler 58 freigegeben ist, erhöhe Zählerinhalt um eine Einheit; sonst verbleibe bei altem Zählerinhalt;
3. Gib bei jeder Erhöhung des Zählerinhaltes einen Takt des Taktsignales an die zweite Unterrahmenzähler 67;
4. Teile den zweiten Unterauswerteschaltungen 66 die zeitliche Lage der Pointer-Bytes V1 bis V4 des VC-12-Containers und des Bytes H4 im POH des VC-4-Containers mit;
5. Gib den zweiten Unterauswerteschaltungen 66 an, ob Daten des zugeordneten VC-12-Containers vorliegen;

Zweite Unterauswerteschaltungen 66:
1. Bilde den Inhalt der V1- bis V4-Pointer-Bytes und gegebenenfalls eine positive Stopfstelle anhand der Markierungsinformation aus dem zugeordneten Pufferspeicher 51 und der Stopfentscheidung aus der zugeordneten Stopfentscheidungsschaltung 60;
2. Teile dem zugeordneten zweiten Unterrahmenzähler 67 die Markierungsinformation mit;
3. Wenn Daten des zugeordneten VC-12-Containers ausgelesen werden sollen oder eine negative Stopfstelle vorliegt, dann starte zugeordneten zweiten Unterrahmenzähler 67;
4. Wenn keine Daten des zugeordneten VC-12-Containers ausgelesen werden sollen oder eine positive Stopfstelle vorliegt, dann stoppe zugeordneten zweiten Unterrahmenzähler 67;

Zweiter Unterrahmenzähler 67:
1. Wenn Markierungsinformation vorliegt (Zähleranfang), setze Zählerinhalt auf Null;
2. Wenn Start von zweiter Unterauswerteschaltung 66 freigegeben ist, erhöhe Zählerinhalt um eine Einheit; sonst verbleibe bei altem Zählerinhalt;
3. Gib bei jeder Erhöhung des Zählerinhaltes einen Takt des Lesetaktsignals ST aus.

Es sei noch erwähnt, daß aus Gründen der Übersichtlichkeit mehrere Leitungen teilweise als eine Leitung dargestellt sind.

## Patentansprüche

1. Übertragungssystem für die synchrone digitale Hierarchie mit wenigstens einer Anpassungsschaltung (8) zum Ausgleich von Phasenschwankungen eines STM-N-signals, die zur Einfügung von Stopfstellen für wenigstens einen Container des Signals einen Pufferspeicher (17, 51) zur Einschreibung von Daten des Containers und zur Auslesung von Daten des Containers enthält,
dadurch gekennzeichnet, daß die Anpassungsschaltung (8)
- einen Schreibadressengenerator (16, 53) zur Bildung von Schreibadressen für die einzuschreibenden und einen Leseadressengenerator (18, 61) zur Bildung von Leseadressen für die auszulesenden Daten,
- ein Filter im wesentlichen zur Tiefpaßfilterung von Stopfinformationen enthaltenen Daten der eingehenden Daten des Containers,
- eine Stopfentscheidungsschaltung (24, 60) zur Bildung eines Stopfsignals aus Werten, die eine Kombination der Differenzwerte der Adressen des Lese- und Schreibadressengenerators und der tiefpaßgefilterten Werte darstellen, und
- eine Ausgangsschaltung (19, 62) enthält zur Bildung von negativen oder positiven Stopfstellen im Container in Abhängigkeit vom Stopfsignal und zur Bildung eines Ausgangssignals aus den in wenigstens einem Pufferspeicher gespeicherten Daten.

2. Übertragungssystem nach Anspruch 1,
dadurch gekennzeichnet, daß zur Tiefpaßfilterung in der Stopfentscheidungsschaltung (24, 60) eine Addition (in 28) der eintreffenden Werte und von rückgekoppelten Werten, eine Zwischenspeicherung (in 29) der addierten Werte mindestens einmal über den Zeitraum von vier Rahmen, eine Multiplikation (in 31) der zwischengespeicherten Werte mit einem ersten Faktor zur Bildung der rückgekoppelten Werte und eine Multiplikation (in 30) mit einem zweiten Faktor zur Bildung der tiefpaßgefilterten Werte vorgesehen ist.

3. Übertragungssystem nach Anspruch 1,
dadurch gekennzeichnet, daß zur Tiefpaßfilterung in der Scopfentscheidungsschaltung (24, 60) ein Zählvorgang (in 33) vorgesehen ist, bei dem eine Zählerveränderung mindestens einmal über den Zeitraum von zwei Rahmen vorgesehen ist, bei dem die Zählrichtung während eines Zeitraumes von der Stopfinformation und während eines weiteren Zeitraumes vom Vorzeichen des Zählerstandes abhängt und bei dem der Zählerstand einen tiefpaßgefilterten Wert darstellt.

4. Übertragungssystem nach Anspruch 1,
dadurch gekennzeichnet, daß zur Tiefpaßfilterung in der Stopfentscheidungsschaltung (24, 60) eine Addition (in 40) der mit einem dritten Faktor multiplizierten Differenzwerte (in 37) und eines rückgekoppelten Wertes mindestens einmal während des Zeitraumes von vier Rahmen, während der Bildung einer Leseadresse eine Akkumulation (in 41) der addierten Werte zur Bildung von tiefpaßgefilterten Werten und eine Multiplikation (in 39) mit dem negativen dritten Faktor zur Bildung des rückgekoppelten Wertes vorgesehen ist.

5. Übertragungssystem nach einem der vorhergehenden Ansprüche,
dadurch gekennzeichnet, daß die Stopfentscheidungsschaltng (24, 60) zur Bildung des Mittelwertes der sich aus der Tiefpaßfilterung und Differenzbildung ergebenen Werte über eine bestimmte Dauer und zur Bildung eines vom Mittelwert abhängigen Stopfsignales vorgesehen ist.

6. Übertragungssystem nach Anspruch 5,
dadurch gekennzeichnet, daß in der Stopfentscheidungsschaltung (24, 60) nach der Tiefpaßfilterung und Differenzbildung über eine bestimmte Dauer zur Mittelwertbildung eine Akkumulation (in 44) der sich aus der Tiefpaßfilterung und Differenzbildung ergebenen Werte und anschließend ein Vergleich (in 46) des Mittelwertes mit zwei vorgegebenen Extremwerten vorgesehen ist und daß die Stopfentscheidungsschaltung zur Erzeugung eines negativen Stopfsignals zur Bildung einer negativen Stopfstelle, wenn der Mittelwert kleiner als der niedrige Extremwert ist, und zur Erzeugung eines positiven Stopfsignals vorgesehen ist, wenn der Mittelwert größer als der hohe Extremwert ist.

7. Übertragungssystem nach Anspruch 6,
dadurch gekennzeichnet, daß in der Stopfentscheidungsschaltung (24, 60) zusammen mit der Akkumulation (in 44) der sich aus der Tiefpaßfilterung und Differenzbildung ergebenden Werte eine Akkumulation von Werten einer periodischen Zahlenfolge (in 48) oder einer Zufallsfolge vorgesehen ist.

8. Übertragungssystem nach Anspruch 6,
dadurch gekennzeichnet, daß die Stopfentscheidungsschaltung (24, 60) zur Bildung eines Differenzwertes (in 25) von Null bei halbem Füllstand des zugeordneten Pufferspeichers, zur Multiplikation (in 50) der negativen und positiven Stopfsignale mit einem vierten Faktor und zur Akkumulation (in 44) mit wenigstens eines mit einem vierten Faktor multiplizierten Wertes mit einem sich aus der Tiefpaßfilterung und Differenzbildung ergebenden Wertes vorgesehen ist.

9. Übertragungssystem nach Anspruch 4 und 8,
dadurch gekennzeichnet, daß in der Stopfentscheidungsschaltung (24, 60) eine Addition (in 40) der mit einem fünften Faktor multiplizierten (in 43) negativen und positiven Stopfsignale zusammen mit dem mit einem dritten Faktor multiplizierten (in 37) Differenzwerte und der rückgekoppelten Werte vorgesehen ist.

10. Übertragungssystem nach einem der Ansprüche 5 bis 9,
dadurch gekennzeichnet, daß die bestimmte Dauer zur Bildung eines Mittelwertes eine Zeilen- oder Rahmendauer oder ein ganzzahliges Vielfaches davon beträgt.

11. Übertragungssystem nach einem der vorhergehenden Ansprüche,
dadurch gekennzeichnet, daß die Anzahl der Pufferspeicher (17, 51), die Anzahl der Schreib- und Leseadressengeneratoren (16, 53; 18; 61) und die Anzahl der Stopfentscheidungsschaltungen (24, 60) von der Anzahl der zur Einfügung von Stopfstellen vorgesehenen Container abhängt.

12. Übertragungssystem nach einem der vorhergehenden Ansprüche,
dadurch gekennzeichnet, daß eine Eingangsschaltung (11, 52) zur Erzeugung eines Schreibtaktsignals (ST) aus einem aus dem STM-N-Signal gewonnenen Eingangstaktsignal (T1) für wenigstens einen aus einem Schreibzähler bestehenden Schreibadressengenerator (16, 53) und zur Bildung von Schreibtaktimpulsen nur bei anliegenden Daten des dem Schreibadressengenerators zugeordneten Containers vorgesehen ist.

13. Übertragungssystem nach einem der vorhergehenden Ansprüche,
dadurch gekennzeichnet, daß die Ausgangsschaltung (19, 62) zur Erzeugung eines Lesetaktsignals (LT) aus einem von einem Oszillator erzeugten Ausgangstaktsignal (T2) für wenigstens einen aus einem Lesezähler bestehenden Leseadressengenerator (18, 61) und zur Bildung von Lesetaktimpulsen nur bei zur Auslesung aus dem dem Leseadressengenerator zugeordneten Pufferspeicher (17, 51) vorgesehenen Daten des zugeordneten Containers bestimmt ist.

14. Übertragungssystem nach Anspruch 13,
dadurch gekennzeichnet, daß die Ausgangsschaltung (19, 62) zur Erzeugung eines Lesetaktsignales (LT) bei einem negativen Stopfsignal und zur Unterbrechung der Erzeugung des Lesetaktsignals bei einem positiven Stopfsignal vorgesehen ist.

## Claims

1. Transmission system for synchronous digital hierarchy, having at least one adaptation circuit (8) for the compensation of phase jitter of an STM-N signal, which circuit contains, for the insertion of justification locations for at least one container of the signal, a buffer memory (17, 51) for writing in data of the container and for reading out data of the container,
characterized in that the adaptation circuit (8) contains
- a write address generator (16, 53) for forming write addresses for the data to be written in, and a read address generator (18, 61) for forming read addresses for the data to be read out,
- a filter essentially for the low-pass filtering of data containing justification information items, of the incoming data of the container,
- a justification decision circuit (24, 60) for forming a justification signal from values which represent a combination of the difference values between the addresses of the read address and write address generators and of the low-pass-filtered values, and - an output circuit (19, 62) for forming negative or positive justification locations in the container as a function of the justification signal, and for forming an output signal from the data stored in at least one buffer memory.

2. Transmission system according to Claim 1,
characterized in that, for the low-pass filtering in the justification decision circuit (24, 60), there are provided addition (in 28) of the arriving values and of feedback values, buffer-storage (in 29) of the added values at least once over the time period of four frames, multiplication (in 31) of the buffer-stored values by a first factor for the purpose of forming the feedback values, and multiplication (in 30) by a second factor for the purpose of forming the low-pass-filtered values.

3. Transmission system according to Claim 1,
characterized in that, for the low-pass filtering in the justification decision circuit (24, 60), a counting operation (in 33) is provided in which a counter change is provided at least once over the time period of two frames, in which the counting direction depends on the justification information item during one time period and on the sign of the counter reading during a further time period, and in which the counter reading represents a low-pass-filtered value.

4. Transmission system according to Claim 1,
characterized in that, for the low-pass filtering in the justification decision circuit (24, 60), there are provided addition (in 40) of the difference values (in 37), which difference values are multiplied by a third factor, and of a feedback value at least once during the time period of four frames, and, during the formation of a read address, accumulation (in 41) of the added values for the purpose of forming low-pass-filtered values and multiplication (in 39) by the negative third factor for the purpose of forming the feedback value.

5. Transmission system according to one of the preceding claims,
characterized in that the justification decision circuit (24, 60) is provided for forming the average value of the values, resulting from the low-pass filtering and difference formation, over a specific duration and for forming a justification signal which is a function of the average value.

6. Transmission system according to Claim 5,
characterized in that, in the justification decision circuit (24, 60), after the low-pass filtering and difference formation over a specific duration for the purpose of averaging, accumulation (in 44) of the values resulting from the low-pass filtering and difference formation and then comparison (in 46) of the average value with two predetermined extreme values are provided, and in that the justification decision circuit is provided for generating a negative justification signal for the purpose of forming a negative justification location if the average value is less than the low extreme value, and for generating a positive justification signal if the average value is greater than the high extreme value.

7. Transmission system according to Claim 6,
characterized in that, together with the accumulation (in 44) of the values resulting from the low-pass filtering and difference formation, accumulation of values of a periodic number sequence (in 48) or of a random sequence is provided in the justification decision circuit (24, 60).

8. Transmission system according to Claim 6,
characterized in that the justification decision circuit (24, 60) is provided for forming a difference value (in 25) of zero given half occupancy of the assigned buffer memory, for multiplying (in 50) the negative and positive justification signals by a fourth factor, and for accumulating (in 44) at least one value, which is multiplied by a fourth factor, with a value resulting from the low-pass filtering and difference formation.

9. Transmission system according to Claims 4 and 8,
characterized in that addition (in 40) of the negative and positive justification signals which are multiplied (in 43) by a fifth factor, together with the difference values which are multiplied (in 37) by a third factor, and of the feedback values is provided in the justification decision circuit (24, 60).

10. Transmission system according to one of Claims 5 to 9,
characterized in that the specific duration for forming an average value is a row or frame duration or an integral multiple thereof.

11. Transmission system according to one of the preceding claims,
characterized in that the number of buffer memories (17, 51), the number of write address and read address generators (16, 53; 18; 61) and the number of justification decision circuits (24, 60) depend on the number of containers provided for the insertion of justification locations.

12. Transmission system according to one of the preceding claims,
characterized in that an input circuit (11, 52) is provided for generating a write clock signal (ST) from an input clock signal (T1), obtained from the STM-N signal, for at least one write address generator (16, 53) comprising a write counter, and for forming write clock pulses only given the presence of data of the container assigned to the write address generator.

13. Transmission system according to one of the preceding claims,
characterized in that the output circuit (19, 62) is intended to generate a read clock signal (LT) from an output clock signal (T2), generated by an oscillator, for at least one read address generator (18, 61) comprising a read counter, and to form read clock pulses only given the presence of data of the assigned container that are provided for read-out from the buffer memory (17, 51) assigned to the read address generator.

14. Transmission system according to Claim 13,
characterized in that the output circuit (19, 62) is provided for generating a read clock signal (LT) given the presence of a negative justification signal and for interrupting the generation of the read clock signal given the presence of a positive justification signal.

## Revendications

1. Système de transmission pour la hiérarchie numérique synchrone équipé d'au moins un circuit d'adaptation (8) en vue de la compensation de fluctuations de phase d'un signal STM-N, qui contient, en vue de l'insertion de points de bourrage pour au moins un conteneur du signal, une mémoire-tampon (17, 51) en vue de l'écriture de données du conteneur et en vue de la lecture de données du conteneur, caractérisé en ce que le circuit d'adaptation (8) comporte
- un générateur d'adresses d'écriture (16, 53) en vue de la formation d'adresses d'écriture pour les données à écrire et un générateur d'adresses de lecture (18, 61) en vue de la formation d'adresses de lecture pour les données à lire,
- un filtre, principalement en vue du filtrage passe-bas d'informations de bourrage contenues dans les données provenant du conteneur,
- un circuit de décision de bourrage (24, 60) en vue de la formation d'un signal de bourrage à partir des valeurs qui représentent une combinaison des valeurs de différence des adresses du générateur d'adresses de lecture et d'écriture et des valeurs filtrées passe-bas, et
- un circuit de sortie (19, 62) en vue de la formation de points de bourrage négatifs ou positifs dans le conteneur en fonction du signal de bourrage, et en vue de la formation d'un signal de sortie à partir des données mémorisées dans au moins une mémoire-tampon.

2. Système de transmission selon la revendication 1, caractérisé en ce qu'en vue du filtrage passe-bas dans le circuit de décision de bourrage (24, 60), est prévue une addition (dans 28) des valeurs incidentes et des valeurs réappliquées, une mémorisation intermédiaire (dans 29) des valeurs additionnées au moins une fois durant l'intervalle de temps de quatre trames, une multiplication (dans 31) des valeurs mémorisées intermédiaires par un premier facteur en vue de la formation des valeurs réappliquées, et une multiplication (dans 30) par un second facteur en vue de la formation des valeurs filtrées passe-bas.

3. Système de transmission selon la revendication 1, caractérisé en ce qu'en vue du filtrage passe-bas dans le circuit de décision de bourrage (24, 60), est prévu un processus de comptage (dans 33), dans lequel une variation du compteur est prévue au moins une fois durant deux trames, dans lequel le sens de comptage durant un intervalle de temps dépend de l'information de bourrage et durant un autre intervalle de temps dépend du signe de l'état du compteur et dans lequel l'état du compteur représente une valeur filtrée passe-bas.

4. Système de transmission selon la revendication 1, caractérisé en ce qu'en vue du filtrage passe-bas dans le circuit de décision de bourrage (24, 60), est prévue une addition (dans 40) des valeurs de différence (dans 37) multipliées par un troisième facteur et une valeur réappliquée au moins une fois durant l'intervalle de temps de quatre trames, durant la formation d'une adresse de lecture, une accumulation (dans 41) des valeurs additionnées en vue de la formation de valeurs filtrées passe-bas et une multiplication (dans 39) par le troisième facteur négatif en vue de la formation de la valeur réappliquée.

5. Système de transmission selon l'une quelconque des revendications précédentes, caractérisé en ce que le circuit de décision de bourrage (24, 60) est prévu en vue de la formation de la valeur moyenne des valeurs résultant du filtrage passe-bas et de la formation de différence sur une durée déterminée et en vue de la formation d'un signal de bourrage fonction de la valeur moyenne.

6. Système de transmission selon la revendication 5, caractérisé en ce que, dans le circuit de décision de bourrage (24, 60) après le filtrage passe-bas et la formation de différence sur une durée déterminée en vue de la formation de la valeur moyenne, une accumulation (dans 44) des valeurs résultantes du filtrage passe-bas et de la formation de différence et ensuite une comparaison (dans 46) de la valeur moyenne avec deux valeurs extrêmes prédéterminées est prévue, et en ce que le circuit de décision de bourrage est prévu en vue de la génération d'un signal de bourrage négatif pour la formation d'un point de bourrage négatif, lorsque la valeur moyenne est inférieure à la valeur extrême inférieure, et en vue de la génération d'un signal de bourrage positif, lorsque la valeur moyenne est supérieure à la valeur extrême supérieure.

7. Système de transmission selon la revendication 6, caractérisé en ce que, dans le circuit de décision de bourrage (24, 60), conjointement avec l'accumulation (dans 44) des valeurs résultantes du filtrage passe-bas et de la formation de différence, est prévue une accumulation de valeurs d'une succession de comptage périodique (dans 48) ou d'une succession aléatoire.

8. Système de transmission selon la revendication 6, caractérisé en ce que le circuit de décision de bourrage (24, 60) est prévu en vue de la formation d'une valeur de différence (dans 25) de 0 à l'état à demi-rempli de la mémoire-tampon associée, en vue de la multiplication (dans 50) des signaux de bourrage négatifs et positifs avec un quatrième facteur, et en vue de l'accumulation (dans 44) d'au moins une valeur multipliée par un quatrième facteur avec une valeur résultant du filtrage passe-bas et de la formation de différence.

9. Système de transmission selon les revendications 4 et 8, caractérisé en ce que, dans le circuit de décision de bourrage (24, 60), est prévue une addition (dans 40) des signaux de bourrage négatifs et positifs multipliés (dans 43) par un cinquième facteur conjointement avec les valeurs de différence et les valeurs réappliquées multipliées (dans 37) par un troisième facteur.

10. Système de transmission selon l'une quelconque des revendications 5 à 9, caractérisé en ce que la durée déterminée en vue de la formation d'une valeur moyenne s'élève à une durée de ligne ou de trame ou à un multiple entier de celle-ci.

11. Système de transmission selon l'une quelconque des revendications précédentes, caractérisé en ce que le nombre des mémoires-tampons (17, 51), le nombre des générateurs d'adresses d'écriture et de lecture (16, 53 ; 18, 61) et le nombre des circuits de décision de bourrage (24, 60) dépendent du nombre des conteneurs prévus en vue de l'insertion de points de bourrage.

12. Système de transmission selon l'une quelconque des revendications précédentes, caractérisé en ce qu'un circuit d'entrée (11, 52) est prévu en vue de la génération d'un signal d'horloge d'écriture (ST) à partir d'un signal d'horloge d'entrée (T1) obtenu à partir du signal STM-N pour au moins un générateur d'adresses d'écriture (16, 53) se composant d'un compteur d'écriture, et en vue de la formation d'impulsions d'horloge d'écriture uniquement dans le cas de données adjacentes du conteneur associé au générateur d'adresses d'écriture.

13. Système de transmission selon l'une quelconque des revendications précédentes, caractérisé en ce que le circuit de sortie (19, 62) est déterminé en vue de la génération d'un signal d'horloge de lecture (LT) à partir d'un signal d'horloge de sortie (T2) généré par un oscillateur pour au moins un générateur d'adresses de lecture (18, 61) se composant d'un compteur de lecture, et en vue de la formation d'impulsions d'horloge de lecture uniquement dans le cas de la lecture à partir des données prévues de la mémoire-tampon (17, 51) associée au générateur d'adresses de lecture du conteneur associé.

14. Système de transmission selon la revendication 13, caractérisé en ce que le circuit de sortie (19, 62) est prévu en vue de la génération d'un signal d'horloge de lecture (LT) dans le cas d'un signal de bourrage négatif, et en vue de l'interruption de la génération du signal d'horloge de lecture dans le cas d'un signal de bourrage positif.
